# EUROPÄISCHE PATENTSCHRIFT

(11) **EP 3 318 033 B1**
(45) Veröffentlichungstag und Bekanntmachung des Hinweises auf die Patenterteilung: **13.05.2020**
(21) Anmeldenummer: 16732610.7
(22) Anmeldetag: 27.06.2016
(51) Int. Cl.: H04L 29/06

(54) **ANTI-CRACKING VERFAHREN MIT HILFE EINES VERMITTLUNGSCOMPUTER**
ANTI-CRACKING METHOD INVOLVING A RELAYING COMPUTER
PROCÉDÉ ANTI-CRACKING IMPIQUANT UN ORDINATEUR-RELAIS

(30) Priorität: 30.06.2015 DE 102015110501; 30.09.2015 DE 102015116601; 16.11.2015 DE 102015119779
(43) Veröffentlichungstag der Anmeldung: 09.05.2018
(73) Patentinhaber: Fujitsu Technology Solutions Intellectual Property GmbH, 80807 München (DE)
(72) Erfinder: CLAES, Heinz-Josef, 80807 München (DE); HOSFELD, Alexander, 33415 Verl (DE)
(74) Vertreter: Epping - Hermann - Fischer
(86) Internationale Anmeldenummer: PCT/EP2016/064862
(87) Internationale Veröffentlichungsnummer: WO 2017/001342

(56) Entgegenhaltungen:
- JP-A- 2013 201 621
- US-A1- 2007 067 625
- US-A1- 2009 106 834
- GREEN M L ET AL: "Grid-Enabled Virtual Organization Based Dynamic Firewall", GRID COMPUTING, 2004. PROCEEDINGS. FIFTH IEEE/ACM INTERNATIONAL WORKSH OP ON PITTSBURGH, PA, USA 08-08 NOV. 2004, PISCATAWAY, NJ, USA,IEEE, 8. November 2004 (2004-11-08), Seiten 208-216, XP010769500, DOI: 10.1109/GRID.2004.35 ISBN: 978-0-7695-2256-2

## Beschreibung

Die Erfindung betrifft ein Verfahren zum Freischalten externer Computersysteme für eine Kommunikation mit abgesicherten Bearbeitungs-Computersystemen in einer Computernetz-Infrastruktur, ein verteiltes Rechnernetz mit einer Computernetz-Infrastruktur und zumindest einem externen Computersystem, sowie ein Computerprogramm-Produkt zur Durchführung eines entsprechenden Verfahrens.

Verteilte Rechnernetze beschreiben eine Mehrzahl von Computersystemen, die über Datenverbindungen in Computernetz-Infrastrukturen organisiert miteinander kommunizieren können. Anwendung finden verteilte Rechnernetze beispielsweise in Computernetz-Infrastrukturen, welche Server-Client-Topologien umfassen, wobei zum Teil vertrauliche Daten, z. B. Kundendaten oder Benutzerdaten, zwischen einem Client und einem Server ausgetauscht werden und wobei ein Zugriff Dritter auf diese Daten unterbunden werden muss.

In abgesicherten Computernetz-Infrastrukturen sind Bearbeitungs-Computersysteme, auf denen (vertrauliche) Daten verarbeitet werden, speziell abgesichert. Beispielsweise können vorbestimmte Netzwerk-Ports der Bearbeitungs-Computersysteme zunächst geschlossen sein, so dass über Netzwerk ein Zugriff beziehungsweise Verbindungsaufbau zu einem jeweiligen Bearbeitungs-Computersystem nicht möglich ist.

Herkömmliche Lösungen sehen hier vor, vorbestimmte Anklopf-Signale über Netzwerk an ein Bearbeitungs-Computersystem mit derart geschlossenen Netzwerk-Ports zu senden (so genanntes Port-Knocking), wobei eine vorbestimmte Daten-Sequenz vorbestimmte Netzwerk-Ports des Bearbeitungs-Computersystems anspricht. Diese Daten-Sequenz wird mit einer vorbestimmten Sequenz im Bearbeitungs-Computersystem verglichen, wobei das Bearbeitungs-Computersystem im Erfolgsfall einen oder mehrere Netzwerk-Ports öffnet, um einen Verbindungsaufbau von außen über Netzwerk zu erlauben.

Eine Gefahr dieser Maßnahmen besteht darin, dass ein Bearbeitungs-Computersystem somit für Angreifer (Cracker) beziehungsweise nicht-autorisierte Computersysteme, welche einen entsprechenden Port-Knocking-Prozess manipulieren, geöffnet wird. Auf diese Weise ist ein (manipulativer) Zugriff Dritter auf unter Umständen vertrauliche Daten im Bearbeitungs-Computersystem mittels der geöffneten Netzwerk-Ports möglich. Ferner ist für eine Ansprechbarkeit von Diensten im geöffneten Bearbeitungs-Computersystem ein laufendes Programm an einem oder mehreren Netzwerk-Ports des Bearbeitungs-Computersystems erforderlich. Dieses laufende Programm stellt eine potentielle Sicherheitslücke für Angriffe von außen (z. B. über Buffer-Overflow oder so genannte Denial-of-Service-Attacken, DOS) über Netzwerk dar.

Eine explizite Authentifizierung eines externen Computersystems direkt an einem Bearbeitungs-Computersystem innerhalb der Computernetz-Infrastruktur für einen Zugriff scheidet bei herkömmlichen Lösungen aus, weil ein Bearbeitungs-Computersystem - wie oben erläutert - zunächst vermittels geschlossener Netzwerk-Ports keinen Verbindungsaufbau von außen zulässt.

Umgekehrt gestaltet sich ein Ansprechen eines externen Computersystems, welches einen Zugriff auf ein Bearbeitungs-Computersystem verlangt, vom Bearbeitungs-Computersystem aus oftmals als schwierig oder gar unmöglich, weil das externe Computersystem unter Umständen selbst abgesichert ist und womöglich für einen Verbindungsaufbau nicht ansprechbar ist.

Zudem erfolgt ein Zugriff auf Bearbeitungs-Computersysteme innerhalb einer Computernetz-Infrastruktur meist über das Internet oder ein separates Intranet (z. B. für eine Freischaltung von Applikationen), wobei sich derartige Zugriffe oft dadurch auszeichnen, dass die auf die Computernetz-Infrastruktur (z. B. Rechenzentrum) zugreifenden externen Computersysteme über einen privaten Zugang kommen, der keine (eindeutige) öffentliche IP-Adresse verwendet. Beispiele hierfür sind kaskadierte Anbindungen über einen Proxy oder mittels so genannter NAT/PAT-Maskierungs-Verfahren (NAT = Network Adress Translation, PAT = Port Adress Translation).

Dies führt dazu, dass grundsätzlich keine Verbindung von einem Bearbeitungs-Computersystem innerhalb der Computernetz-Infrastruktur auf das entsprechende externe Computersystem initiiert werden kann, weil das Bearbeitungs-Computersystem weder die exakte IP-Adresse noch den Port des externen Computersystems aufgrund der Maskierung selbiger nicht kennt. Ferner ist die IP-Adresse gewöhnlich privat und nicht direkt in einem Routing verwendbar. Zudem ist sie gewöhnlich in der Kommunikation hinter einer Firewall abgesichert.

Die Veröffentlichung US 2009/0106834 zeigt Systeme und Verfahren zur Erhöhung der Sicherheit durch selektives Öffnen eines Netzwerk-Ports, wenn eine eingehende Verbindung erwartet wird. Ein Netzwerk-Port wird geöffnet, wenn ein Client über einen separaten Connection Broker authentifiziert wurde.

Die Veröffentlichung US 2007/0067625 zeigt ein System für einen sicheren Zugriff auf einen Server durch einen Client. Der Server überprüft über eine erste Verbindung Zugriffsrechte des Clients und überträgt an den Client eine verschlüsselte, zufällige Netzwerk-Portnummer und einen Sitzungsschlüssel und erkennt den Aufbau einer zweiten Verbindung zwischen dem Client und dem Zufalls-Netzwerk-Port des Servers.
Die Aufgabe der vorliegenden Erfindung besteht darin, durch technische Maßnahmen eine gesicherte Freischaltung externer Computersysteme für eine Kommunikation mit abgesicherten Bearbeitungs-Computersystemen innerhalb einer Computernetz-Infrastruktur zu ermöglichen und dennoch den Schutz vor Angriffen auf entsprechende Computersysteme in der Computernetz-Infrastruktur zu verbessern.

In einem ersten Aspekt wird diese Aufgabe durch ein Verfahren nach Anspruch 1 gelöst.

Bei dem Verfahren werden zum Freischalten externer Computersysteme für eine Kommunikation mit abgesicherten Bearbeitungs-Computersystemen in einer Computernetz-Infrastruktur die folgenden Schritte vorgeschlagen.

Zunächst wird ein Anweisungs-Paket von einem externen Computersystem, welches außerhalb der Computernetz-Infrastruktur eingerichtet ist, an ein Vermittlungs-Computersystem innerhalb der Computernetz-Infrastruktur übertragen. Das Anweisungs-Paket signalisiert dem Vermittlungs-Computersystem eine Anweisung des externen Computersystems für eine gewünschte Kommunikation mit einem Bearbeitungs-Computersystem innerhalb der Computernetz-Infrastruktur. Das Anweisungs-Paket kann z.B. als sogenannter Token ausgeführt sein, der dem Vermittlungs-Computersystem vom externen Computersystem gemäß einem bestimmen Übertragungsprotokoll übergeben wird. Das Anweisungs-Paket kann auch (ggf. signierte) Informationen zur Authentifizierung des externen Computersystems enthalten.

Ausgelöst durch die Übertragung des Anweisungs-Paketes wird durch das Vermittlungs-Computersystem eine zufällige Portnummer eines Netzwerk-Ports generiert. Die zufällige Portnummer gibt somit einen zufällig ausgewählten Netzwerk-Port für eine weitere verfahrensgemäße Freischaltung eines Bearbeitungs-Computersystems vor. Die Bestimmung der zufälligen Portnummer kann anhand von dem Fachmann bekannten aleatorischen Methoden erfolgen.

Die zufällige Portnummer wird automatisiert vom Vermittlungs-Computersystem an das externe Computersystem sowie an zumindest ein Bearbeitungs-Computersystem innerhalb der Computernetz-Infrastruktur übertragen. Das Bearbeitungs-Computersystem hält zumindest vorübergehend gegenüber dem externen Computersystem vorbestimmte Netzwerk-Ports geschlossen, so dass ein Zugriff auf das Bearbeitungs-Computersystem durch das externe Computersystem über Netzwerk vermittels dieser Netzwerk-Ports verhindert wird. Jedoch können die zufällige Portnummer oder andere Informationen zwischen dem Bearbeitungs-Computersystem und dem Vermittlungs-Computersystem ausgetauscht werden. Dieser Vorgang kann über ein gemeinsames Zugangsnetz zwischen dem Vermittlungs-Computersystem und dem Bearbeitungs-Computersystem oder über ein hierzu vorgesehenes spezielles Verbindungsnetz zwischen dem Vermittlungs-Computersystem und dem Bearbeitungs-Computersystem erfolgen.

Ferner erfolgt verfahrensgemäß ein Freischalten des zu zufälligen Portnummer korrespondierenden Netzwerk-Ports durch das Bearbeitungs-Computersystem für eine Kommunikation mit dem externen Computersystem und ein nachfolgendes Aufbauen einer Verbindung zum freigeschalteten Netzwerk-Port des Bearbeitungs-Computersystems durch das externe Computersystem.
Bei dem erläuterten Verfahren sind initial alle vorbestimmten Netzwerk-Ports des Bearbeitungs-Computersystems gegenüber dem externen Computersystem für einen Zugriff durch das externe Computersystem geschlossen. Das Bearbeitungs-Computersystem verhält sich somit gegenüber dem externen Computersystem als eingekapseltes (speziell abgesichertes) System. Ein Zugriff des externen Computersystems über ein Netzwerk auf das Bearbeitungs-Computersystem ist zumindest unter bestimmten Betriebsbedingungen (vorteilhaft dauerhaft während der Durchführung des hier erläuterten Verfahrens ohne gezielte Freischaltung) nicht oder nur deutlich erschwert möglich. Verbindungsversuche durch das externe Computersystem auf das Bearbeitungs-Computersystem werden in diesem Fall durch das Bearbeitungs-Computersystem ignoriert bzw. verworfen. Dies kann durch gezielte Portfilter, Portsperren und/oder Firewall-Regeln erreicht werden.

Vorteilhaft hält das Bearbeitungs-Computersystem auch gegenüber dem Vermittlungs-Computersystem zumindest vorübergehend vorbestimmte Netzwerk-Ports derart geschlossen, dass ein Zugriff auf das Bearbeitungs-Computersystem durch das Vermittlungs-Computersystem über Netzwerk vermittels dieser Netzwerk-Ports verhindert wird. Verbindungsversuche durch das Vermittlungs-Computersystem auf das Bearbeitungs-Computersystem werden in diesem Fall durch das Bearbeitungs-Computersystem ignoriert bzw. verworfen. Dies kann durch gezielte Portfilter, Portsperren und/oder Firewall-Regeln, z.B. speziell für die IP-Adresse des Vermittlungs-Computersystems, erreicht werden. Jedoch kann das Bearbeitungs-Computersystem auf das Vermittlungs-Computersystem zugreifen, um die zufällige Portnummer oder andere Informationen vom Vermittlungs-Computersystem abzuholen.

Der Begriff "vorbestimmte Netzwerk-Ports" bedeutet, dass im Bearbeitungs-Computersystem sämtliche oder nur ausgewählte sicherheitskritische Netzwerk-Ports, z. B. die für dieses Verfahren verwendeten Netzwerk-Ports, dauerhaft (diese werden bei der Generierung der zufälligen Portnummer nicht berücksichtigt und gemäß dem erläuterten Verfahren nie freigeschaltet) oder vorübergehend (diese werden bei der Generierung der zufälligen Portnummer berücksichtigt und können selektiv gemäß dem erläuterten Verfahren freigeschaltet werden) geschlossen sind.

Dies hat den Vorteil, dass auf dem Bearbeitungs-Computersystem für ein Freischalten einer Kommunikation mit einem externen Computersystem initial keine Programme oder Dienste eingerichtet beziehungsweise verfügbar sind, die zum Zwecke der Ansprechbarkeit beziehungsweise des Verbindungsaufbaus von außen die entsprechenden Netzwerk-Ports abhören (so genanntes "Listening") und somit eine potentielle Sicherheitslücke (z. B. für Buffer-Overflow oder DoS-Attacken bzw. sog. distributed DoS-Attacken) bilden. Somit bedeutet der Begriff "geschlossene Netzwerk-Ports" in diesem Kontext, dass diese keine "Listening Ports" sind, das heißt, (ohne verfahrensgemäße autorisierte Freischaltung) kein Verbindungsaufbau von außen zugelassen wird. Ein Dritter (Cracker) ist in diesem Fall nicht in der Lage, sich von außen über Netzwerk am Bearbeitungs-Computersystem zu authentifizieren oder einzuloggen, z. B. bei Unix-basierten Systemen über einen Secure-Shell-(SSH-)-Daemon, einen http-Dienst oder sonstige Dienste/Applikation usw., oder spezielle Aktionen auf dem Bearbeitungs-Computersystem durchzuführen.

Allerdings kann für eine vorbestimmte Benutzergruppe ein lokaler Zugriff auf das Bearbeitungs-Computersystem eingerichtet sein (z. B. für ein Sicherheitspersonal). Für andere Dritte wird jedoch ein lokaler Zugriff auf das Bearbeitungs-Computersystem verhindert.

Durch die generelle Abschottung des Bearbeitungs-Computersystems gemäß der erläuterten Art und Weise ist somit ein Angriff über Netzwerk erschwert, weil eine entscheidende Angriffsmöglichkeit, nämlich laufende Dienste oder Programme an geöffneten ("Listening") Netzwerk-Ports der jeweiligen Systeme unterbunden sind. Somit sind bei dem erläuterten Verfahren insbesondere sicherheitskritische Daten, welche lokal auf dem Bearbeitungs-Computersystem verarbeitet werden, gegen Angriffe geschützt.

Zum Freischalten einer Kommunikation zwischen dem externen Computersystem außerhalb der Computernetz-Infrastruktur und dem Bearbeitungs-Computersystem innerhalb der Computernetz-Infrastruktur erlaubt das Verfahren im Unterschied zum Bearbeitungs-Computersystem einen Zugriff von außerhalb der Computernetz-Infrastruktur auf das zumindest eine Vermittlungs-Computersystem innerhalb der Computernetz-Infrastruktur. Das Vermittlungs-Computersystem ist als "offenes" System mit wenigstens einem ansprechenbaren offenen ("Listening") Netzwerk-Port über Netzwerk zugänglich. Das bedeutet, dass auf dem Vermittlungs-Computersystem beispielsweise Programme laufen und/oder Applikationen (Dienste) vorbereitet sind, so dass das Bearbeitungs-Computersystem innerhalb der Computernetz-Infrastruktur oder das externe Computersystem außerhalb der Computernetz-Infrastruktur jeweils auf das Vermittlungs-Computersystem zugreifen können und eine Verbindung zum Vermittlungs-Computersystem aufbauen können, um Datenpakete oder sonstige Informationen (über eine dann aufgebaute Verbindung, "Established") im Vermittlungs-Computersystem abzulegen oder von dort abzuholen. Unter Sicherheitsaspekten ist ein solches "offenes" Vermittlungs-Computersystem ähnlich zu bewerten wie ein traditionelles, speziell abgesichertes Computersystem.

Somit dient das Vermittlungs-Computersystem als (abgesicherter, aber ansprechbarer) Vermittler für eine Kommunikation zwischen dem Bearbeitungs-Computersystem und dem externen Computersystem.

Vorteilhaft erfolgt ein Verbindungsaufbau zwischen dem Bearbeitungs-Computersystem und dem Vermittlungs-Computersystem innerhalb der Computernetz-Infrastruktur über ein internes Netzwerk, welches beispielsweise als "Virtual Private Network" (VPN) oder Secure-Shell-Netzwerk (SSH) oder als eine Kombination davon abgesichert ist.

Ein Verbindungsaufbau vom externen Computersystem außerhalb der Computernetz-Infrastruktur auf das Vermittlungs-Computersystem innerhalb der Computernetz-Infrastruktur erfolgt beispielsweise über Internet oder über ein Routing von einem separaten Intranet aus (z. B. ein Client-Intranet). Beispielsweise kann das externe Computersystem ein Client sein, der hinter einem NAT- und/oder PAT-Router sitzt. Dabei erfolgt ein Verbindungsaufbau zum Vermittlungs-Computersystem von einem lokalen Client-Intranet über eine private Quell-IP-Adresse des Clients aus, welche im Router mit einer öffentlichen IP-Adresse des Routers maskiert wird.

Gemäß dem erläuterten Verfahren erfolgt für eine Freischaltung des externen Computersystems für eine Kommunikation mit dem zunächst abgesicherten Bearbeitungs-Computersystem innerhalb der Computernetz-Infrastruktur die Generierung einer zufälligen Portnummer eines Netzwerk-Ports durch das Vermittlungs-Computersystem. Diese Generierung wird durch das Übertragen des Anweisungs-Paketes vom externen Computersystem an das Vermittlungs-Computersystem ausgelöst.

Das Anweisungs-Paket enthält vorteilhaft eine Anweisung bzw. einen Befehl zum Freischalten und Herstellen einer Kommunikationsverbindung zwischen dem externen Computersystem und einem dedizierten Bearbeitungs-Computersystem, zum Beispiel zum Zugreifen auf einen Dienst oder eine Anwendung in diesem Bearbeitungs-Computersystem. Das Anweisungs-Paket kann auch signierte Informationen über das externe Computersystem enthalten. Diese können gegebenenfalls Informationen über einen anzusprechenden Dienst oder allgemein Prozess auf dem Bearbeitungs-Computersystem umfassen, welcher vom externen Computersystem angesprochen werden soll. Es ist auch denkbar Authentifizierungs-Informationen zur Authentifizierung des externen Computersystems im Anweisungs-Paket vorzusehen. Eine Signierung entsprechender Informationen im Anweisungs-Paket hat den Vorteil, dass eine Manipulation des Anweisungs-Paketes erschwert wird. Vorteilhaft wird das Anweisungs-Paket im externen Computersystem vor der Übertragung an das Vermittlungs-Computersystem verschlüsselt.

Die Generierung der zufälligen Portnummer kann bereits während eines Verbindungsaufbaus zur Übertragung des Anweisungs-Paketes vom externen Computersystem zum Vermittlungs-Computersystem automatisiert erfolgen. Es ist alternativ auch denkbar die Generierung der zufälligen Portnummer erst im Nachgang eines Verbindungsaufbaus, d.h. nach erfolgreichem Aufbauen einer Verbindung, zwischen dem externen Computersystem und dem Vermittlungs-Computersystem durchzuführen.

Die generierte zufällige Portnummer gibt einen spezifischen Netzwerk-Port im Bearbeitungs-Computersystem vor, der als Ziel-Port (so genannter "destination port") für einen Verbindungsaufbau vom externen Computersystem zum Bearbeitungs-Computersystem freigeschaltet werden soll. Die zufällige Portnummer wird optional nach ihrer Generierung im Vermittlungs-Computersystem verschlüsselt. Die Verschlüsselung erfolgt vorteilhaft so, dass der Wert (ausschließlich) vom externen Computersystem und vom Bearbeitungs-Computersystem entschlüsselt werden kann zur weiteren verfahrensgemäßen Verarbeitung der zufälligen Portnummer.

Die generierte zufällige Portnummer wird vorteilhaft um die für das Vermittlungs-Computersystem (und damit auch für das Bearbeitungs-Computersystem) sichtbare IP-Adresse, die dem externen Computersystem zuordenbar ist, ergänzt. Diese IP-Adresse kann z.B. diejenige eines NAT-Routers sein, von dem das Vermittlungs-Computersystem das Anweisungs-Paket unmittelbar erhalten hat. Die zufällige Portnummer kann beispielsweise gemeinsam mit der dem externen Computersystem zuordenbaren IP-Adresse in ein Daten-Paket eingepackt werden, welches anschließend vom Vermittlungs-Computersystem an das Bearbeitungs-Computersystem übertragen wird. Das Daten-Paket kann optional auch die Informationen aus dem Anweisungs-Paket enthalten und insoweit mit dem Anweisungs-Paket übereinstimmen. Vorteilhaft wird auch dieses Daten-Paket verschlüsselt.

Zum Übertragen der zufälligen Portnummer und ggf. der dem externen Computersystem zuordenbaren IP-Adresse auf das Bearbeitungs-Computersystem wird ein Prozess angestoßen, wobei zwischen dem Bearbeitungs-Computersystem und dem Vermittlungs-Computersystem über Netzwerk eine Verbindung aufgebaut wird.

In dem Fall, dass das Bearbeitungs-Computersystem auch gegenüber dem Vermittlungs-Computersystem die maßgeblichen Netzwerk-Ports geschlossen hält und keinen Verbindungsaufbau vom Vermittlungs-Computersystem aus zulässt, wird zum Übertragen der zufälligen Portnummer und ggf. der dem externen Computersystem zuordenbaren IP-Adresse auf das Bearbeitungs-Computersystem ein Prozess angestoßen, wobei das Bearbeitungs-Computersystem selbst das Vermittlungs-Computersystem über Netzwerk anspricht und eine Verbindung zum Vermittlungs-Computersystem aufbaut.

Die oben erläuterten Informationen (zufällige Portnummer und gegebenenfalls IP-Adresse) können im Weiteren im Vermittlungs-Computersystem aufgerufen und automatisiert über eine hergestellte Verbindung ("Established") vom Vermittlungs-Computersystem auf das Bearbeitungs-Computersystem übertragen werden. Vorteilhaft ist das automatisierte Übertragen so ausgestaltet, dass ein Dritter von außen darauf keine oder nur sehr erschwert Einflussmöglichkeiten hat und somit eine Gefahr von Manipulationen der ausgetauschten Daten oder eines der beteiligten Computersysteme ausgeschlossen bzw. stark reduziert ist.

Nach erfolgreicher Übertragung der zufälligen Portnummer erfolgt eine Freischaltung des zur zufälligen Portnummer korrespondierenden Netzwerk-Ports im Bearbeitungs-Computersystem. Im Falle einer Übertragung der dem externen Computersystem zuordenbaren IP-Adresse als Quell-IP-Adresse bedeutet der Begriff "Freischaltung" in diesem Kontext eine Freigabe dieser Quell-IP-Adresse selektiv am Ziel-Netzwerk-Port des Bearbeitungs-Computersystems, der der zufälligen Portnummer entspricht, für einen Verbindungsaufbau und eine anschließende Kommunikation zu und mit dem Bearbeitungs-Computersystem (über einen aus einer Vielzahl von Quell-Netzwerk-Ports in Kombination mit der Quell-IP-Adresse).

Vorteilhaft erfolgt im Bearbeitungs-Computersystem eine Umleitung des durch die zufällige Portnummer bestimmten freigeschalteten Netzwerk-Ports auf einen Port, der standardmäßig einem bestimmten Dienst oder Daemon zugeordnet ist. Auf diese Weise ist der entsprechende Dienst über den freigeschalteten Netzwerk-Port ansprechbar, ohne den Dienst bei jedem Freischalten erneut für einen zufälligen Netzwerk-Port einzurichten. Diese Zuordnung kann dynamisch bei jeder Freischaltung erfolgen oder statisch vorab festgelegt sein.

Nach dem Freischalten des durch die zufällige Portnummer bestimmten Netzwerk-Ports durch das Bearbeitungs-Computersystem erfolgt schließlich ein Aufbauen einer Verbindung (neue Session) zu diesem selektiv freigeschalteten Netzwerk-Port durch das externe Computersystem (via der freigeschalteten IP-Adresse und einem bestimmten Quell-Netzwerk-Port). Diese neu aufgebaute Verbindung kann beispielsweise eine SSH-Verbindung, eine VPN-Verbindung oder eine Kombination davon sein. Beispielsweise ist denkbar, eine SSH-Verbindung aufzubauen, in welcher dann eine VPN-Verbindung etabliert, d.h. aufgebaut wird.

Es ist vorteilhaft, einen entsprechenden Verbindungsaufbau nur in einem vorbestimmten Zeitrahmen, der unter Umständen applikationsabhängig entsprechend kurz sein kann (z. B. je nach Netzwerkgeschwindigkeit einige Millisekunden oder einige Sekunden, z.B. bis zu 20 Sekunden, oder auch bis zu einigen Minuten), zuzulassen. Erfolgt in dem vorgegebenen Zeitrahmen kein entsprechender Verbindungsaufbau durch das externe Computersystem, so wird der selektiv freigeschaltete Netzwerk-Port des Bearbeitungs-Computersystems aus Sicherheitsgründen wieder geschlossen, um die Gefahr eines missbräuchlichen Verbindungsaufbaus oder die manipulative Ausnutzung des geöffneten Netzwerk-Ports (z.B. vermittels eines Port-Scannings) durch Computersysteme mit der (zufällig) selben IP-Adresse, die z.B. hinter demselben NAT-Router sitzen, zu reduzieren.

Eine Anwendung des vorliegenden Verfahrens ist beispielsweise ein Freischalten einer Applikation auf dem Bearbeitungs-Computersystem für einen externen Client, welcher über Internet eine gezielte (und in gewissem Rahmen dennoch beschränkte und abgesicherte) Freischaltung des Bearbeitungs-Computersystems innerhalb der Computernetz-Infrastruktur anfragt. Das Bearbeitungs-Computersystem kann z.B. auch ein VPN-Server sein, zu dem nach Freischaltung eine VPN-Verbindung aufgebaut werden kann. Über diese VPN-Verbindung ist dann ein Zugriff auf bestimmte Dienste, z.B. auf einem weiteren Server, der Computernetz-Infrastruktur möglich.

Der generelle Vorteil des hier erläuterten Verfahrens besteht darin, dass ein unsicheres und angreifbares Öffnen von Netzwerk-Ports am Bearbeitungs-Computersystem auf eine manipulierbare Anfrage eines externen Computersystems hin (z.B. via Port-Knocking) vermieden wird. Darüber hinaus muss/kann das Bearbeitungs-Computersystem keine Verbindung nach außerhalb der Computernetz-Infrastruktur aufbauen, um eine Authentifizierung einer (zunächst) unbekannten Quelle durchzuführen. Ferner wird verhindert, dass das Bearbeitungs-Computersystem eine Verbindung nach außen zulässt, ohne zu wissen, ob das Gegenüber überhaupt vertrauenswürdig ist.

Vor einer Freischaltung einer Kommunikation mit einem externen Computersystem erfolgt lediglich eine abgesicherte Kommunikation mit dem internen Vermittlungs-Computersystem innerhalb der Computernetz-Infrastruktur seitens des Bearbeitungs-Computersystems zum Abholen von Informationen über eine generierte zufällige Portnummer und gegebenenfalls eine Quell-IP-Adresse des externen Computersystems zur Freischaltung eines korrespondierenden Netzwerk-Ports, wie oben erläutert. Erst danach erfolgt ein gezieltes Freischalten des entsprechenden Netzwerk-Ports und gegebenenfalls der Quell-IP-Adresse für eine Kommunikation mit dem externen Computersystem.

Ein Angreifer, der (zufällig) dieselbe IP-Adresse verwendet wie das externe Computersystem, z.B. weil der Angreifer hinter demselben NAT-Router sitzt, hat die Möglichkeit, in der begrenzten Zeit der Freischaltung des Netzwerk-Ports im Bearbeitungs-Computersystem für das externe Computersystem, zum Beispiel während der Initialisierungsphase eines Verbindungsaufbaus, Manipulationen am Bearbeitungs-Computersystem vorzunehmen. Ein Angreifer könnte zum Beispiel einen so genannten "Zero-Day-Exploit" ausnutzen, um einen Angriff auf das Bearbeitungs-Computersystem zu starten. Bereits wegen der hierfür anzunehmenden Umstände (dieselbe für das Bearbeitungs-Computersystem sichtbare IP-Adresse, passender Zeit Slot, sowie Vorhandensein und Zugriff auf Manipulationsmöglichkeiten wie z.B. einen Zero-Day-Exploit) ist die Wahrscheinlichkeit und Möglichkeit für einen entsprechenden Angriff als sehr gering anzusehen.

Durch die Verwendung eines für jede externe Verbindung zufällig freigeschalteten Netzwerk-Ports (aufgrund einer jeweils im Vermittlungs-Computersystem generierten zufälligen Portnummer) sinkt die Wahrscheinlichkeit für einen Angriff zum passenden Zeitpunkt und am passenden Netzwerk-Port gegenüber herkömmlichen Varianten nochmals deutlich. Auch die für einen Angriff notwendigen Portscans werden wesentlich aufwändiger. Somit wird durch die verfahrensgemäßen Maßnahmen der oben erläuterten Art, insbesondere durch das Generieren einer zufälligen Portnummer für die Freischaltung eines korrespondierenden Netzwerk-Ports, die Wahrscheinlichkeit für einen Angriff auf das Bearbeitungs-Computersystem extrem reduziert.

Vorteilhaft wird nach dem Aufbauen einer Verbindung zum selektiv freigeschalteten Netzwerk-Port des Bearbeitungs-Computersystems, über die die nachfolgende Kommunikation mit dem externen Computersystem läuft, folgender zusätzlicher Schritt durchgeführt:
- Begrenzen der Kommunikation zwischen dem Bearbeitungs-Computersystem und dem externen Computersystem auf den freigeschalteten Netzwerk-Port des Bearbeitungs-Computersystems und einen Netzwerk-Port des externen Computersystems, der dem Bearbeitungs-Computersystem (als Quell-Netzwerk-Port) durch die aufgebaute Verbindung bekannt ist. Bei diesen Maßnahmen ist zu berücksichtigen, dass ggf. parallel stattfindende Verbindungsaufbauten mehrerer Computersysteme sich nicht gegenseitig beeinträchtigen.

Eine Begrenzung auf den selektiven Quell-Netzwerk-Port des externen Computersystems hat den Vorteil, dass anderweitige Kommunikationen unterbunden werden. So kann das externe Computersystem nur eingeschränkt auf einzelne Netzwerk-Ports (auf beiden Seiten), also Quell-Netzwerk-Port des externen Computersystems und freigeschalteter Ziel-Netzwerk-Port des Bearbeitungs-Computersystems, mit dem Bearbeitungs-Computersystem kommunizieren. Der selektive Netzwerk-Port des externen Computersystems kann beispielsweise der Quell-Netzwerk-Port der letzten Übertragung vermittels der aufgebauten ("Established") Verbindung sein. Falls beispielsweise das externe Computersystem hinter einem NAT-Router sitzt, wird verhindert, dass nicht-autorisierte Systeme oder Angreifer, welche ebenfalls hinter dem NAT-Router sitzen, neben der bereits hergestellten Verbindung zwischen dem externen Computersystem und dem Bearbeitungs-Computersystem eine weitere Verbindung zum Bearbeitungs-Computersystem (via derselben Quell-IP-Adresse und einem anderen Quell-Netzwerk-Port des NAT-Routers) aufbauen können und somit nicht-autorisierten Zugriff auf das Bearbeitungs-Computersystem erhalten. Die vorgenannten Maßnahmen erlauben somit eine gezielte Beschränkung eines Zugriffs auf das Bearbeitungs-Computersystem über eine autorisierte (einzelne) Netzwerk-Verbindung. Andere nicht-autorisierte Verbindungen beziehungsweise deren Aufbauversuche werden im Bearbeitungs-Computersystem verworfen beziehungsweise nicht berücksichtigt.

Vorteilhaft werden bei dem Verfahren der erläuterten Art die folgenden weiteren Maßnahmen durchgeführt:
- Beschränken der durch das externe Computersystem zum selektiv freigeschalteten Netzwerk-Port des Bearbeitungs-Computersystems aufgebauten Verbindung auf einen Austausch von Authentifizierungs-Informationen zwischen dem externen Computersystem und dem Bearbeitungs-Computersystem,
- Prüfen von durch das externe Computersystem übertragenen Authentifizierungs-Informationen,
- Freigeben der durch das externe Computersystem zum selektiv freigeschalteten Netzwerk-Port des Bearbeitungs-Computersystems aufgebauten Verbindung für einen erweiterten Zugriff auf das Bearbeitungs-Computersystem oder auf weitere Bearbeitungs-Computersysteme innerhalb der Computernetz-Infrastruktur, falls das Prüfen der Authentifizierungs-Informationen erfolgreich war.

Durch diese Maßnahmen ist die durch das externe Computersystem zum selektiv freigeschalteten Netzwerk-Port des Bearbeitungs-Computersystems aufgebaute Verbindung zunächst auf den Austausch von Authentifizierungs-Informationen beschränkt. Ein Zugriff des externen Computersystems auf das Bearbeitungs-Computersystem oder auf weitere Bearbeitungs-Computersysteme innerhalb der Computernetz-Infrastruktur, insbesondere ein Zugriff auf bestimmte gewünschte Dienste innerhalb der Computernetz-Infrastruktur, ist in diesem Zustand blockiert bzw. stark eingeschränkt. Somit ist die Verbindung zwischen dem externen Computersystem und dem Bearbeitungs-Computersystem zwar aufgebaut, allerdings bis auf den Austausch von Authentifizierungs-Informationen noch nicht durch das externe Computersystem verwendbar.

Vielmehr wird zunächst das Übertragen von Authentifizierungs-Informationen durch das externe Computersystem verlangt. Diese übertragenen Authentifizierungs-Informationen werden innerhalb der Computernetz-Infrastruktur, zum Beispiel durch das Bearbeitungs-Computersystem, weitere Bearbeitungs-Computersysteme und/oder eine sonstige die Verbindung kontrollierende Authentifizierungs-Instanz (zum Beispiel eine Firewall) überprüft. Erst wenn die Authentifizierungs-Informationen positiv überprüft worden sind, wird die Verbindung für einen weiteren Datenaustausch zwischen dem externen Computersystem und dem Bearbeitungs-Computersystem freigegeben.

Die Verbindung zwischen dem externen Computersystem und dem Bearbeitungs-Computersystem kann beispielsweise mittels vorbestimmter Firewall-Regeln einer Firewall beschränkt bzw. geblockt werden (abgesehen von einem Austausch von Authentifizierungs-Informationen). Durch die Firewall-Regeln ist somit nur ein definierter Datenaustausch von Authentifizierungs-Informationen erlaubt. Ferner kann durch die Firewall-Regeln eine Verbindung des externen Computersystems zu weiteren Bearbeitungs-Computersystemen innerhalb der Computernetz-Infrastruktur beschränkt bzw. geblockt sein (abgesehen von einem möglichen Austausch von erforderlichen Authentifizierungs-Informationen mit diesen Systemen). Beispielsweise können für einen Austausch von Authentifizierungs-Informationen lediglich beschränkte Verbindungsaufbauten zu weiteren Bearbeitungs-Computersystemen innerhalb der Computernetz-Infrastruktur aufgrund von speziell hierfür freigeschalteten Ports an diesen Systemen (zum Beispiel Port 22 für eine SSH-Verbindung) erlaubt sein.

Nach einem positiven Prüfen der übertragenen Authentifizierungs-Informationen können die Firewall-Regeln teilweise oder vollständig aufgehoben werden, so dass das externe Computersystem über die aufgebaute Verbindung einen letztendlichen Zugriff auf Dienste des Bearbeitungs-Computersystem oder weiterer Systeme innerhalb der Computernetz-Infrastruktur erhält. Dies kann beispielsweise durch das Freischalten von gewünschten IP-Adressen oder Netzwerk-Ports der an das Bearbeitungs-Computersystem angebundenen Systeme innerhalb der Computernetz-Infrastruktur erfolgen.

Ein Vorteil der an dieser Stelle genannten Maßnahmen besteht darin, dass nach einem Aufbauen einer Verbindung vom externen Computersystem zum Bearbeitungs-Computersystem die Verbindung zunächst derart beschränkt ist, dass Angriffsmöglichkeiten aus Richtung des externen Computersystems während der Überprüfung einer Authentifizierung des externen Computersystems nicht oder nur sehr erschwert möglich sind. Dies erweist sich insbesondere als nützlich, falls ein Angreifer Teile der Infrastruktur (zum Beispiel einen Router auf der Verbindungsstrecke zwischen dem externen Computersystem und dem Bearbeitungs-Computersystem) kontrolliert.

In alternativen Ausgestaltungen können auch verschachtelte Verbindungen zwischen dem externen Computersystem und dem Bearbeitungs-Computersystem vorgesehen sein. Beispielsweise könnte für den Aufbau der Verbindung vom externen Computersystem zum Bearbeitungs-Computersystem zunächst eine SSH-Verbindung erfolgen. In dem dann bestehenden SSH-Tunnel kann eine VPN-Verbindung etabliert, das heißt aufgebaut werden. In dieser VPN-Verbindung könnte wiederum eine Authentifizierung durch ein weiteres Authentifizierungsverfahren (wie zum Beispiel "https") erfolgen. Es ist auch denkbar, mehrere VPN-Verbindungen ineinander zu verschachteln. Hier wären vorteilhaft unterschiedliche Algorithmen zu verwenden.

Die Authentifizierungs-Informationen können beispielsweise innerhalb eines so genannten Verifikations-Paketes vom externen Computersystem an das Bearbeitungs-Computersystem übertragen werden. Durch Senden des Verifikations-Paketes kann sichergestellt werden, dass die Verbindung von der richtigen autorisierten Instanz (und nicht durch einen unbefugten Dritten, z. B. mit gleicher IP-Adresse hinter einem NAT-Router oder mit manipulierter IP-Adresse) aufgebaut worden ist. Durch die vorgenannten Maßnahmen kann somit sichergestellt werden, dass nach einem Freischalten des selektiven Ziel-Netzwerk-Port des Bearbeitungs-Computersystems diejenige externe Instanz auch die Verbindung zum Bearbeitungs-Computersystem aufbaut, die zuvor eine entsprechende Verbindung über das Anweisungs-Paket angefragt hat.

Die Authentifizierungs-Informationen können bestimmte Autorisierungs- oder Identitätsmerkmale des externen Computersystems umfassen, die im Bearbeitungs-Computersystem oder sonstigen Authentifizierungs-Instanzen anhand von hinterlegten Vergleichs-Informationen überprüft und bestätigt werden. Derartige Autorisierungs- oder Identitätsmerkmale können z.B. Merkmale der Hardware des externen Computersystems, biometrische Merkmale bestimmter Benutzer des externen Computersystems sowie Passwörter (Passphrasen oder Credentials, Schlüssel, usw.) umfassen.

Bevorzugt werden bei dem Verfahren der erläuterten Art die folgenden zusätzlichen Schritte durchgeführt:
- Übertragen einer ersten Zufallszahl vom externen Computersystem an das Vermittlungs-Computersystem,
- Generieren einer zweiten Zufallszahl durch das Vermittlungs-Computersystem,
- Übertragen der zweiten Zufallszahl vom Vermittlungs-Computersystem an das externe Computersystem sowie
- Übertragen der ersten und zweiten Zufallszahl vom Vermittlungs-Computersystem an das Bearbeitungs-Computersystem.

In dem Fall, dass das Bearbeitungs-Computersystem auch gegenüber dem Vermittlungs-Computersystem die maßgeblichen Netzwerk-Ports geschlossen hält und keinen Verbindungsaufbau vom Vermittlungs-Computersystem aus zulässt, wird zum Übertragen der ersten und zweiten Zufallszahl auf das Bearbeitungs-Computersystem ein Prozess angestoßen, wobei das Bearbeitungs-Computersystem auf das Vermittlungs-Computersystem zugreift, um die erste und zweite Zufallszahl vom Vermittlungs-Computersystem abzuholen.

Die Erzeugung und Übertragung von Zufallszahlen zwischen den beteiligten Computersystemen (externes Computersystem, Vermittlungs-Computersystem sowie Bearbeitungs-Computersystem) kann im Rahmen eines Austausches von Authentifizierungs-Informationen der oben erläuterten Art erfolgen bzw. eine spezielle Art von Authentifizierungs-Informationen bilden und dient vorteilhaft sowohl der Validierung des externen Computersystems gegenüber der Computernetz-Infrastruktur als auch der Prüfung von Manipulationsversuchen oder Fälschungen des erläuterten Prozesses im Vermittlungs-Computersystem. Da die Zufallszahlen ihrem Begriff nach für eine einzelne Freischaltung eines externen Computersystems zufällig erzeugt werden, gelten sie nur für diese Freischaltung. Somit ist eine reproduzierte Fälschung von Zufallszahlen zur Manipulation zukünftiger Freischaltungen extrem erschwert bzw. kaum möglich. Aufgrund der Erzeugung einer jeweiligen Zufallszahl sowohl im externen Computersystem als auch im Vermittlungs-Computersystem ist eine Validierung der beteiligten Computersysteme bzw. eine Prüfung einzelner Prozessschritte durch das Bearbeitungs-Computersystem möglich. Die Generierung der Zufallszahlen kann anhand von dem Fachmann bekannten aleatorischen Methoden erfolgen.

Vorteilhaft werden die Zufallszahlen von den betreffenden Computersystemen, in denen sie erzeugt werden, derart verschlüsselt, dass nur das Bearbeitungs-Computersystem diese entschlüsseln kann. Eine Verschlüsselung kann zum Beispiel mithilfe eines asymmetrischen Verschlüsselungsverfahrens (z.B. Verfahren mit einem öffentlichen und einem privaten Schlüssel) durchgeführt werden. Auf diese Weise wird erschwert, dass ein anderes als das Bearbeitungs-Computersystem die jeweilige Zufallszahl lesen geschweige denn manipulieren kann. Hierzu müsste zunächst eine Verschlüsselung überwunden werden.

Die Funktionalität der Zufallszahlen wird im Folgenden anhand eines Beispiels näher erläutert. Vom externen Computersystem wird eine erste Zufallszahl Z1 generiert und an das Vermittlungs-Computersystem übertragen. Die Zufallszahl Z1 kann beispielsweise dem Anweisungs-Paket beigefügt sein. Z1 wird dabei so verschlüsselt, dass der Inhalt nur vom Bearbeitungs-Computersystem gelesen werden kann. Während oder nach der Übertragung des Anweisungs-Paketes vom externen Computersystem an das Vermittlungs-Computersystem wird durch das Vermittlungs-Computersystem eine zweite Zufallszahl Z2 generiert. Z2 wird ebenfalls so verschlüsselt, dass nur das Bearbeitungs-Computersystem diese entschlüsseln kann. Z2 wird während oder nach der Übertragung des Anweisungs-Paketes vom Vermittlungs-Computersystem an das externe Computersystem übertragen. Es existieren nach dem-Austausch von Z1 und Z2 zwischen dem externen Computersystem und dem Vermittlungs-Computersystem also bei jedem der beiden Computersysteme diese beiden Zufallszahlen Z1 und Z2, von denen jeweils eine auf dem Computersystem selbst und die andere auf dem anderen Computersystemen generiert wurde. Dabei ist Z1 nicht vom Vermittlungs-Computersystem und Z2 nicht vom externen Computersystem lesbar, da verschlüsselt. Z1 und Z2 werden (ggf. zusammen mit anderen Informationen) in einem weiteren Schritt vom Vermittlungs-Computersystem auf das Bearbeitungs-Computersystem übertragen. Im Bearbeitungs-Computersystem können die Zufallszahlen Z1 und Z2 anschließend geprüft werden, wie weiter unten erläutert wird.

Vorteilhaft wird die erste Zufallszahl Z1 vor dem Übertragen mit einer Signatur des externen Computersystems signiert.

Weiterhin wird vorteilhaft die im Vermittlungs-Computersystem generierte zweite Zufallszahl Z2 vor dem Übertragen mit einer Signatur des Vermittlungs-Computersystems signiert. Eine jeweilige Signatur der Zufallszahlen im erzeugenden Computersystem hat den Vorteil, dass die Zufallszahlen auf das erzeugende Computersystem hin verifiziert werden können. Dadurch ist eine gewisse Sicherheit gegen Fälschungen der Zufallszahlen durch andere, unter Umständen nicht vertrauenswürdige, Computersysteme gegeben. Eine Signatur kann beispielsweise durch einen privaten Schlüssel des entsprechenden Computersystems vorgenommen werden.

Bevorzugt werden die Signaturen der Zufallszahlen dadurch erweitert, dass nach Übertragen der signierten ersten Zufallszahl Z1 vom externen Computersystem an das Vermittlungs-Computersystem die Signatur der ersten Zufallszahl Z1 mit einer weiteren Signatur des Vermittlungs-Computersystems signiert wird und dass nach Übertragen der signierten zweiten Zufallszahl Z2 vom Vermittlungs-Computersystem an das externe Computersystem die Signatur der zweiten Zufallszahl Z2 mit einer weiteren Signatur des externen Computersystems signiert wird. Auf diese Weise werden die signierten Zufallszahlen Z1 und Z2 durch das jeweils andere Computersystem nochmals signiert. Somit ist die Reihenfolge des Transfers der Zufallszahlen Z1 und Z2 zwischen dem externen Computersystem und dem Vermittlungs-Computersystem für eine weitere Prüfung, zum Beispiel im Bearbeitungs-Computersystem, nachvollziehbar.

Vorteilhaft werden nach dem Aufbauen einer Verbindung zum selektiv freigeschalteten Netzwerk-Port des Bearbeitungs-Computersystems durch das externe Computersystem folgende Schritte durchgeführt:
- Übertragen der ersten und zweiten Zufallszahl vom externen Computersystem unmittelbar auf das Bearbeitungs-Computersystem vermittels der aufgebauten Verbindung sowie
- Prüfen einer jeweiligen Übereinstimmung der ersten und zweiten Zufallszahl, die durch das Vermittlungs-Computersystem auf das Bearbeitungs-Computersystem übertragen wurden, mit der ersten und zweiten Zufallszahl, die durch das externe Computersystem unmittelbar auf das Bearbeitungs-Computersystem übertragen wurden, im Bearbeitungs-Computersystem.

Aufgrund der erläuterten Maßnahmen liegen somit im Bearbeitungs-Computersystem schlussendlich zwei Paare von Zufallszahlen (Z1 und Z2) vor. Das eine Paar wurde vom Vermittlungs-Computersystem an das Bearbeitungs-Computersystem übertragen und das andere Paar wurde vom externen Computersystem an das Bearbeitungs-Computersystem übertragen. Im Bearbeitungs-Computersystem kann eine Übereinstimmung der beiden Paare von Zufallszahlen, konkret eine Übereinstimmung der beiden ersten Zufallszahlen (Z1) und eine Übereinstimmung der beiden zweiten Zufallszahlen (Z2) geprüft werden. Insbesondere werden die Zufallszahlen im Bearbeitungs-Computersystem entschlüsselt und anhand der mehrfachen Signaturen der Zufallszahlen (wie oben erläutert) der Austausch der Zufallszahlen zwischen dem externen Computersystem und dem Vermittlungs-Computersystem durch das Bearbeitungs-Computersystem nachvollzogen. Ferner werden die Werte der jeweiligen Zufallszahlen miteinander verglichen.

Vorteilhaft wird eine nach Freischaltung des entsprechenden Netzwerk-Ports hergestellte Verbindung zwischen dem externen Computersystem und dem Bearbeitungs-Computersystem durch das Bearbeitung-Computersystem abgebaut, wenn das oben erläuterte Prüfen der jeweiligen Übereinstimmung der ersten und zweiten Zufallszahlen (Z1 und Z2) durch das Bearbeitungs-Computersystem negativ ausfällt. Dann geht das Bearbeitungs-Computersystem davon aus, dass ein Manipulationsversuche vorliegt und bricht die Verbindung zum externen Computersystem aus Sicherheitsgründen ab.

Durch die erläuterten Maßnahmen der Generierung, des Austausches und der Überprüfung von mehreren Zufallszahlen zwischen den beteiligten Computersystemen wird eine Manipulation einer Freischaltung des externen Computersystems extrem erschwert. Dabei wird sowohl ein Manipulationsversuch von Seiten eines externen Computersystems als auch ein Manipulationsversuch von Seiten des Vermittlungs-Computersystems vermittels einer Überprüfung der Zufallszahlen durch das Bearbeitungs-Computersystem erkannt und entsprechende Maßnahmen (Abbau der externen Verbindung) durchgeführt.

In dem Fall, dass das Bearbeitungs-Computersystem auch gegenüber dem Vermittlungs-Computersystem die maßgeblichen Netzwerk-Ports geschlossen hält und keinen Verbindungsaufbau vom Vermittlungs-Computersystem aus zulässt, wie oben erläutert, umfasst das Übertragen der zufälligen Portnummer oder anderer Informationen vom Vermittlungs-Computersystem auf das Bearbeitungs-Computersystem vorteilhaft die folgenden Schritte:
- Senden einer vorbestimmten Daten-Sequenz vom Vermittlungs-Computersystem oder vom externen Computersystem an das Bearbeitungs-Computersystem, wobei die vorbestimmten Netzwerk-Ports des Bearbeitungs-Computersystems geschlossen sind und wobei die Sequenz in einer vorbestimmten Reihenfolge einen oder mehrere Netzwerk-Ports des Bearbeitungs-Computersystems anspricht,
- Überprüfen der gesendeten Daten-Sequenz auf Übereinstimmung mit einer vordefinierten Sequenz im Bearbeitungs-Computersystem, sowie
- Veranlassen des Übertragens der zufälligen Portnummer oder anderer Informationen durch das Bearbeitungs-Computersystem, falls die Überprüfung der gesendeten Sequenz positiv ist, wobei das Bearbeitungs-Computersystem seinerseits eine Verbindung zum Vermittlungs-Computersystem aufbaut und die zufällige Portnummer oder andere Informationen vom Vermittlungs-Computersystem abholt.

Die Maßnahmen haben den Vorteil, dass grundsätzlich die (für das Verfahren maßgeblichen) Netzwerk-Ports des Bearbeitungs-Computersystems - in oben erläutertem Sinne - initial geschlossen sind und einen Verbindungsaufbau zum Bearbeitungs-Computersystem von außen blockieren beziehungsweise einen manipulativen Zugriff deutlich erschweren. Für sämtliche externen Computersysteme hat das Bearbeitungs-Computersystem dauerhaft (bis auf eine kurze Zeitspanne, in der eine bestimmte Quell-IP-Adresse gemäß den obigen Schritten freigeschaltet ist) geschlossene Netzwerk-Ports und blockiert jeglichen Verbindungsaufbau. Auch gegenüber dem Vermittlungs-Computersystem wird in diesem Fall jeglicher Verbindungsaufbau blockiert.

Das Veranlassen des Übertragens der zufälligen Portnummer oder anderer Informationen vermittels des Bearbeitungs-Computersystems zur Authentifizierung eines freizuschaltenden externen Computersystems kann ein automatisierter Prozess zum Übertragen der zufälligen Portnummer oder anderer Informationen auf das Bearbeitungs-Computersystem (z. B. über den Unix-basierten Befehl "Secure copy", scp) sein. Gemäß dem Prozess baut das Bearbeitungs-Computersystem seinerseits eine Verbindung zum Vermittlungs-Computersystem auf und holt die zufällige Portnummer oder andere Informationen ab. Dieser Prozess kann durch das Bearbeitungs-Computersystem gestartet werden, nachdem eine vorbestimmte Daten-Sequenz an das Bearbeitungs-Computersystem gesendet wurde, falls diese Daten-Sequenz mit einer vordefinierten Sequenz übereinstimmt. Das Sequenz-sendende Computersystem kann das Vermittlungs-Computersystem oder alternativ das externe Computersystem sein. Die IP-Adresse des Sequenz-sendenden Computersystems kann dabei statisch im Bearbeitungs-Computersystem vorgegeben oder dynamisch aus den dem Kernel des Bearbeitungs-Computersystems bekannten Quell-IP-Adressen möglicher Sequenz-sendender Computersysteme entnommen werden.

Wie bereits eingangs erläutert, ist ein derartiges Verfahren unter dem Begriff "Port-Knocking" (Englisch: to knock = anklopfen) bekannt. Die vorgenannten Schritte können beispielsweise über einen so genannten Knock-Daemon, also ein Programm, welches Port-Knocking ermöglicht, durchgeführt werden. Der Knock-Daemon wird durch den Kernel des Bearbeitungs-Computersystems über eintreffende Datenpakete (Daten-Sequenz) informiert, die vom Kernel nicht weiter ausgewertet wurden, überprüft die an das Bearbeitungs-Computersystem gesendete Daten-Sequenz und veranlasst gegebenenfalls (z. B. durch Starten eines Skriptes/Programmes) ein gesteuertes Übertragen der zufälligen Portnummer oder anderer Informationen vom Vermittlungs-Computersystem an das Bearbeitungs-Computersystem, wenn die gesendete Daten-Sequenz mit der vordefinierten Sequenz übereinstimmt. Der oben beschriebene Ablauf ermöglicht somit - aktiviert durch das Bearbeitungs-Computersystem, welches einen entsprechenden Dienst auf dem Vermittlungs-Computersystem über Netzwerk anspricht - das Übertragen/Kopieren der zufälligen Portnummer oder anderer Informationen vom Vermittlungs-Computersystem auf das Bearbeitungs-Computersystem, ohne dass das Bearbeitungs-Computersystem hierfür einen offenen Netzwerk-Port mit einem ansprechbaren Programm vorhalten muss. Alternativ können auch andere Verfahren, die zu einem vergleichbaren Ergebnis führen, verwendet werden.

Alternativ oder ergänzend zum oben erläuterten Port-Knocking ist auch denkbar, dass das Bearbeitungs-Computersystem von sich aus in regelmäßigen Abständen beim Vermittlungs-Computersystem anfragt (so genanntes Polling), ob eine oder mehrere auszutauschende Informationen in obigem Sinne vorliegen. Ist dies der Fall, kann eine entsprechende Übertragung der Informationen vom Vermittlungs-Computersystem an das Bearbeitungs-Computersystem initiiert werden, wie oben erläutert. Es ist auch denkbar, dass das Bearbeitungs-Computersystem ein Polling durchführt, wenn z. B. eine bestimmte Zeitspanne überschritten wird, in der kein Port-Knocking seitens des Vermittlungs-Computersystems oder des externen Computersystems durchgeführt worden ist. Probleme beim Port-Knocking können so erkannt werden und die Funktionalität der Computernetz-Infrastruktur bleibt erhalten.

Alternativ zu den genannten Lösungen (Port-Knocking, Polling) wäre auch denkbar, ein spezielles Verbindungsnetz zwischen dem Vermittlungs-Computersystem und dem Bearbeitungs-Computersystem vorzusehen, wobei das Bearbeitungs-Computersystem zumindest einen Netzwerk-Port zur Ansprechbarkeit über dieses spezielle Verbindungsnetz geöffnet hat. Über das Verbindungsnetz könnten dann die in obigem Sinne auszutauschenden Informationen vom Vermittlungs-Computersystem an das Bearbeitungs-Computersystem übertragen werden. Dabei kann vorteilhaft ein anderes Protokoll verwendet werden als für eine Verbindung zwischen dem externen Computersystem und dem Vermittlungs-Computersystem vorgesehen ist. Ein solcher Protokollwechsel erhöht ebenfalls die Sicherheit gegen Manipulationen von außerhalb des Netzwerks.

In einem weiteren Aspekt wird die obige Aufgabe durch ein verteiltes Rechnernetz nach Anspruch 8 gelöst. Das verteilte Rechnernetz weist eine Computernetz-Infrastruktur auf, welche zumindest ein Vermittlungs-Computersystem und ein Bearbeitungs-Computersystem umfasst. Ferner ist zumindest ein externes Computersystem im verteilten Rechnernetz eingerichtet, welches sich außerhalb der Computernetz-Infrastruktur befindet.

Das externe Computersystem ist eingerichtet, ein Anweisungs-Paket an das Vermittlungs-Computersystem zu übertragen zur Anweisung einer Kommunikation mit dem Bearbeitungs-Computersystem. Das externe Computersystem ist eingerichtet, eine erste Zufallszahl zu generieren und derart zu verschlüsseln, dass nur das Bearbeitungs-Computersystem diese entschlüsseln kann, und die verschlüsselte erste Zufallszahl auf das Vermittlungs-Computersystem zu übertragen. Das Vermittlungs-Computersystem ist eingerichtet, automatisiert eine zufällige Portnummer eines Netzwerk-Ports zu generieren und die zufällige Portnummer sowohl an das Bearbeitungs-Computersystem als auch an das externe Computersystem zu übertragen. Das Vermittlungs-Computersystem ist eingerichtet, eine zweite Zufallszahl zu generieren und derart zu verschlüsseln, dass nur das Bearbeitungs-Computersystem diese entschlüsseln kann, und die verschlüsselte zweite Zufallszahl auf das externe Computersystem zu übertragen.

Das Bearbeitungs-Computersystem weist eine Zugriffssteuereinheit auf, die eingerichtet ist, zumindest vorübergehend vorbestimmte Netzwerk-Ports geschlossen zu halten, so dass ein Zugriff auf das Bearbeitungs-Computersystem durch das externe Computersystem über ein Netzwerk vermittels dieser Netzwerk-Ports verhindert ist, jedoch ein Verbindungsaufbau zwischen dem Bearbeitungs-Computersystem und dem Vermittlungs-Computersystem erlaubt ist, um die zufällige Portnummer oder andere Informationen auszutauschen.

Ferner ist die Zugriffssteuereinheit des Bearbeitungs-Computersystems eingerichtet, einen zur zufälligen Portnummer korrespondierenden Netzwerk-Port für eine Kommunikation mit dem externen Computersystem freizuschalten und nach Aufbauen einer Verbindung zum selektiv freigeschalteten Netzwerk-Port des Bearbeitungs-Computersystems die Kommunikation zwischen dem Bearbeitungs-Computersystem und dem externen Computersystem auf den freigeschalteten Netzwerk-Port des Bearbeitungs-Computersystems und einen Netzwerk-Port des externen Computersystems zu begrenzen, der dem Bearbeitungs-Computersystem durch die aufgebaute Verbindung bekannt ist.

Das Vermittlungs-Computersystem ist ferner eingerichtet, die verschlüsselte erste und zweite Zufallszahl auf das Bearbeitungs-Computersystem zu übertragen. Das externe Computersystem ist ferner eingerichtet, die verschlüsselte erste und zweite Zufallszahl unmittelbar vermittels der aufgebauten Verbindung auf das Bearbeitungs-Computersystem zu übertragen. Das Bearbeitungs-Computersystem ist ferner eingerichtet, die jeweils vom Vermittlungs-Computersystem und vom externen Computersystem übertragene verschlüsselte erste und zweite Zufallszahl zu entschlüsseln und eine jeweilige Übereinstimmung der entschlüsselten ersten und zweiten Zufallszahl, die durch das Vermittlungs-Computersystem auf das Bearbeitungs-Computersystem übertragen wurden, mit der entschlüsselten ersten und zweiten Zufallszahl, die durch das externe Computersystem unmittelbar auf das Bearbeitungs-Computersystem übertragen wurden, zu prüfen.

Vorteilhaft ist ein derartiges verteiltes Rechnernetz eingerichtet, ein Verfahren der hier erläuterten Art durchzuführen.

Auch durch ein verteiltes Rechnernetz dieser Art ergeben sich die im Zusammenhang mit dem oben erläuterten Verfahren genannten Vorteile analog. Sämtliche vorteilhaften Maßnahmen, die im Zusammenhang mit dem obigen Verfahren erläutert wurden, finden in entsprechenden strukturellen Merkmalen des verteilten Rechnernetzes Anwendung und umgekehrt.

In einem weiteren Aspekt wird die obige Aufgabe durch ein Computerprogramm-Produkt nach Anspruch 12 gelöst, welches eingerichtet ist, auf einem oder mehreren Computersystemen ausgeführt zu werden und welches bei Ausführung ein Verfahren der oben erläuterten Art durchführt.

Weitere vorteilhafte Ausführungen sind in den Unteransprüchen sowie in der nachfolgenden Figurenbeschreibung offenbart.

Die Erfindung wird anhand zweier Zeichnungen im Folgenden näher erläutert.

Es zeigen:
- Figur 1: eine schematisierte Darstellung zumindest eines Teils einer Computernetz-Infrastruktur gemäß einer ersten Konfiguration zum Freischalten eines externen Computersystems,
- Figur 2: eine schematisierte Darstellung zumindest eines Teils einer Computernetz-Infrastruktur gemäß einer zweiten Konfiguration zum Freischalten eines externen Computersystems und
- Figur 3: eine schematisierte Darstellung zumindest eines Teils einer Computernetz-Infrastruktur gemäß einer dritten Konfiguration zum Freischalten eines externen Computersystems.

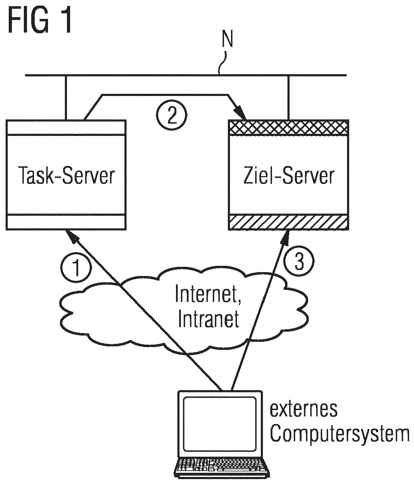

Figur 1 zeigt eine schematisierte Darstellung zumindest eines Teils einer Computernetz-Infrastruktur, umfassend ein Vermittlungs-Computersystem, das in Figur 1 als Task-Server deklariert ist, sowie ein Bearbeitungs-Computersystem, das in Figur 1 als Ziel-Server deklariert ist. Der Ziel-Server kann beispielsweise ein VPN-Server zum selektiven Aufbauen einer VPN-Verbindung von einem externen Computersystem aus sein. Der Task-Server und der Ziel-Server können über ein Netzwerk N miteinander kommunizieren sowie Daten austauschen.

Der Task-Server ist in der dargestellten Topologie als so genanntes "offenes" System eingerichtet. Das bedeutet, dass der Task-Server zumindest einen Netzwerk-Port für die in diesem Kontext erläuterten Zwecke geöffnet hat, wobei ein Dienst beziehungsweise eine Applikation auf dem Task-Server läuft, um eine Ansprechbarkeit beziehungsweise einen Verbindungsaufbau sowohl aus dem Internet oder einem separaten Intranet (in Figur 1 symbolisch als Wolke angedeutet) als auch über das Netzwerk N zu ermöglichen. Beispielsweise kann eine Netzwerk-Verbindung bei diesem Computersystem über VPN ("Virtual Private Network") oder SSH ("Secure Shell") oder eine Kombination derartiger Sicherheitsmaßnahmen eingeschränkt sein, so dass nur vorbestimmte, verschlüsselte Netzwerk-Verbindungen mit dedizierten Computersystemen erlaubt sind. Der Task-Server dient als Vermittler zur Kommunikation und Weiterleitung von Daten-Paketen an den Ziel-Server innerhalb der Computernetz-Infrastruktur.

Im Unterschied zum Task-Server verhält sich der Ziel-Server zum Netzwerk N hin generell als speziell abgesichertes System mit geschlossenen Netzwerk-Ports. Dies ist durch eine kreuzschraffierte Ein-/Ausgangsebene am Ziel-Server zum Netzwerk N hin schematisiert dargestellt. Das bedeutet, dass an den Netzwerk-Ports des Ziel-Servers zum Netzwerk N hin keine laufenden Programme oder Dienste für eine Ansprechbarkeit beziehungsweise einen Verbindungsaufbau zum Ziel-Server über das Netzwerk N von außen sichtbar bzw. verfügbar sind. Vielmehr ist ein nicht autorisierter Zugriff auf den Ziel-Server über das Netzwerk N aufgrund der jeweils geschlossenen Netzwerk-Ports des Ziel-Servers nicht möglich. Nicht-authentifizierte Verbindungen werden, z.B. durch geeignete Firewall-Regeln (z.B. iptables) - entweder auf dem Ziel-Server selbst oder auf einem vorgeschalteten System (z.B. einem Router) - unterbunden. Es ist jedoch denkbar, dass eine Benutzergruppe lokal auf den Ziel-Server zugreifen kann, um dort lokal vorbestimmte Aktionen durchzuführen.

Zum Internet bzw. externen Intranet hin weist der Ziel-Server ebenfalls initial geschlossene Netzwerk-Ports auf. Dies ist durch eine schraffierte Ein-/Ausgangsebene am Ziel-Server zum Internet bzw. externen Intranet hin schematisiert dargestellt. Allerdings kann für eine Freischaltung eines externen Computersystems zum Aufbau einer Kommunikationsverbindung zum Ziel-Server ein Netzwerk-Port selektiv zum Internet bzw. externen Intranet hin am Ziel-Server geöffnet werden, um eine Verbindung von einem externen Computersystem zum Ziel-Computersystem zu erlauben. Dies wird weiter unten näher erläutert.

Zur Kommunikation innerhalb der Computernetz-Infrastruktur zwischen dem Task-Server und dem Ziel-Server ist ein vorbestimmter Prozess eingerichtet. Anweisungen können vom Ziel-Server unmittelbar über eine aufgebaute Verbindung ("Established") an den Task-Server übertragen werden, weil der Task-Server, wie oben erläutert, über das Netzwerk N direkt vom Ziel-Server ansprechbar ist.

In Richtung zum Ziel-Server hin muss, ausgehend vom Task-Server oder von einem externen Computersystem außerhalb der Computernetz-Infrastruktur, zunächst ein Port-Knocking-Prozess durchgeführt werden. Hierzu wird eine vorbestimmte Sequenz an Paket-Daten entweder vom Task-Server oder vom externen Computersystem an den Ziel-Server gesendet, wobei die Netzwerk-Ports des Ziel-Servers geschlossen sind und wobei die Sequenz in einer vorbestimmten Reihenfolge einen oder mehrere Netzwerk-Ports des Ziel-Servers anspricht. Anschließend erfolgt eine Überprüfung der gesendeten Sequenz im Ziel-Server auf Übereinstimmung mit einer vordefinierten Sequenz. Im Erfolgsfall erfolgt für eine Kommunikation zwischen dem Ziel-Server und dem Task-Server ein Verbindungsaufbau ausgehend vom Ziel-Server hin zum Task-Server sowie ein Veranlassen eines Übertragens eines entsprechenden Daten-Paketes und/oder einer Anweisung über die aufgebaute Verbindung ("Established").

Insbesondere startet der Ziel-Server einen Prozess, der ein zu übertragendes Daten-Paket (mit darin enthaltenen Informationen) vom Task-Server abholt. Ein derartiger Prozess kann beispielsweise über den Unix-basierten Befehl "Secure Copy" (scp) erfolgen. Auf diese Weise können die beteiligten Computersysteme trotz geschlossener Netzwerk-Ports des Ziel-Servers innerhalb der Computernetz-Infrastruktur über das Netzwerk N miteinander kommunizieren, Daten-Pakete weiterleiten und/oder Anweisungen erteilen.

Nachfolgend soll anhand mehrerer Verfahrensschritte, welche in der Zeichnung als Nummerierungen 1 bis 3 aufgeführt sind, ein Verfahren zum Freischalten einer Kommunikation zwischen dem abgesicherten Ziel-Server innerhalb der Computernetz-Infrastruktur und einem externen Computersystem außerhalb der Computernetz-Infrastruktur erläutert werden.

In einem Schritt 1 verlangt ein externes Computersystem über das Internet und/oder ein von der Computernetz-Infrastruktur (Netzwerk N) getrenntes Intranet eine Freischaltung einer Kommunikation mit dem Ziel-Server. Das externe Computersystem kann beispielsweise ein Gerät, das eine Filiale anbindet (Verbindung von Unternehmensnetzen) oder ein Client sein, der eine Applikation auf dem Ziel-Server innerhalb der Computernetz-Infrastruktur freischalten will. Der Ziel-Server hat jedoch zu diesem Zeitpunkt für das externe Computersystem keine offenen Netzwerk-Ports und gestattet keinen Verbindungsaufbau von extern.

Das externe Computersystem kann beispielsweise hinter einem NAT-/PAT-Router (nicht dargestellt) sitzen, der eine lokale private IP-Adresse des externen Computersystems mit einer (eindeutigen) öffentlichen IP-Adresse des Routers maskiert. Auf diese Weise ist jedoch das externe Computersystem durch den Ziel-Server nicht direkt ansprechbar, weil der Ziel-Server die genaue (private) IP-Adresse des externen Computersystems nicht kennt bzw. das externe Computersystem typischerweise mittels einer oder mehrerer Firewalls geschützt ist.

Zum Freischalten einer Kommunikation mit dem Ziel-Server muss ein spezielles Verfahren durchgeführt werden. Hierzu baut ein externes Computersystem im Schritt 1 über das Internet/Intranet (vgl. das Wolkensymbol in Figur 1) eine Verbindung zum Task-Server auf und schickt über die so aufgebaute Verbindung ein Anweisungs-Paket an den von außen ansprechbaren Task-Server innerhalb der Computernetz-Infrastruktur. Zur Übertragung dieses Paketes kann eine Authentifizierung des externen Computersystems am Task-Server (z. B. über ein VPN und/oder ähnliches) notwendig sein.

Das Anweisungs-Paket enthält eine Anweisung an das Vermittlungs-Computersystem zum Durchführen entsprechender Prozesse zur Freischaltung des externen Computersystems für eine Kommunikation mit dem Ziel-Server. Das Anweisungs-Paket kann als Token eingerichtet sein, der vom externen Computersystem an den Task-Server geschickt wird. Das Anweisungs-Paket kann auch signierte Informationen zur Authentifizierung des externen Computersystems am Ziel-Server enthalten. Diese signierten Informationen können beispielsweise Signaturen des externen Computersystems und/oder eines separaten Key-Computersystems (nicht dargestellt) enthalten, wobei das Key-Computersystem eine Sicherheits-Instanz zum Festlegen und Signieren des externen Computersystems als erlaubtes Computersystem für einen Zugriff auf den Ziel-Server darstellt. Ein separates Key-Computersystem als getrennte Sicherheits-Instanz hat den Vorteil, dass eine Authentifizierung allein im externen Computersystem nicht oder nur erschwert gefälscht werden kann. Auf diese Weise wird sichergestellt, dass ein externes Computersystem, welches den Ziel-Server für eine Kommunikation zumindest partiell freischalten will, tatsächlich autorisiert ist.

Ferner können signierten Informationen im Anweisungs-Paket auch Informationen über das externe Computersystem (z. B. welchen Dienst das externe Computersystem ansprechen will) und/oder gegebenenfalls Durchführungsparameter zur vorbestimmten Durchführung eines Freischaltens beziehungsweise eines nach dem Freischalten durchzuführenden Prozesses im Ziel-Server enthalten. Das Anweisungs-Paket kann auch aus Passwörtern (von Benutzern) generierte Daten, wie z.B. Hashes oder Signaturen, enthalten. Eine weitere oder endgültige Authentifizierung ist optional am Ziel-Server möglich.

Ferner enthält das Anweisungs-Paket eine vom externen Computersystem generierte und mit einer Signatur des externen Computersystems signierte erste Zufallszahl Z1 (nicht dargestellt). Z1 wird dabei im externen Computersystem so verschlüsselt, dass der Inhalt nur vom Ziel-Server gelesen werden kann. Während oder nach der Übertragung des Anweisungs-Paketes vom externen Computersystem an den Task-Server wird durch den Task-Server eine zweite Zufallszahl Z2 (ebenfalls nicht dargestellt) generiert und mit einer Signatur des Task-Servers signiert. Z2 wird ebenfalls so verschlüsselt, dass nur der Ziel-Server diese entschlüsseln kann. Z2 wird während oder nach der Übertragung des Anweisungs-Paketes über die aufgebaute Verbindung vom Task-Server an das externe Computersystem übertragen. Somit existieren nach dem Austausch von Z1 und Z2 zwischen dem externen Computersystem und dem Vermittlungs-Computersystem also bei jedem der beiden Computersysteme diese beiden Zufallszahlen Z1 und Z2.

Die Signaturen der Zufallszahlen Z1 und Z2 werden in dem jeweils anderen Computersystem (von welchem sie nicht generiert wurden) nochmals mit einer Signatur signiert. Das bedeutet, dass die signierte Zufallszahl Z1 im Task-Server mit einer weiteren Signatur des Task-Servers signiert wird und dass die signierte Zufallszahl Z2 im externen Computersystem mit einer weiteren Signatur des externen Computersystems signiert wird. Dies hat den Vorteil, dass die Reihenfolge des Transfers der Zufallszahlen (Z1 und Z2) zwischen dem externen Computersystem und dem Task-Server für eine weitere Prüfung im Ziel-Server nachvollziehbar ist.

Ausgelöst durch das vom externen Computersystem an den Task-Server übertragene Anweisungs-Paket generiert der Task-Server eine zufällige Portnummer eines Netzwerk-Ports, welcher im Ziel-Server für eine Kommunikation mit dem externen Computersystem selektiv freigeschaltet werden soll. Die generierte zufällige Portnummer wird um die sichtbare Quell-IP-Adresse ergänzt, die dem externen anfragenden Computersystem zugeordnet werden kann und beispielsweise die öffentliche IP-Adresse eines NAT-Routers ist, der das Anweisungs-Paket an den Task-Server gesendet hat. Auf diese Weise weiß der Ziel-Server im nachfolgenden Verfahren, dass diese ergänzte Quell-IP-Adresse temporär freigeschaltet werden soll. Die generierte zufällige Portnummer, die sichtbare Quell-IP-Adresse sowie das im Task-Server vorliegende Paar der mehrfach signierten Zufallszahlen Z1 und Z2 werden in ein Daten-Paket zur Übersendung an den Ziel-Server eingepackt.

In einem Schritt 2 schickt der Task-Server über das Netzwerk N an den Ziel-Server ein Anklopfsignal im Sinne eines Port-Knockings (wie oben mehrfach erläutert). Eine vorbestimmte Daten-Sequenz des Anklopfsignals wird an den geschlossenen Netzwerk-Ports des Ziel-Servers über einen Dienst (z. B. einen Knock-Daemon) ausgewertet und mit einer vordefinierten Daten-Sequenz verglichen. Bei Übereinstimmung wird beispielsweise ein Skript oder Programm im Ziel-Server gestartet zur weiteren Prozessierung der im Task-Server vorliegenden Informationen. Diese Maßnahmen des Schrittes 2 (Anklopfen am Ziel-Server) stellen gewissermaßen eine Initiierung für den Ziel-Server dar, dass im Task-Server Informationen für weitergehende Aktionen vorliegen.

Anschließend veranlasst der Ziel-Server einen Verbindungsaufbau über das Netzwerk N zum Task-Server und startet einen Prozess zum Übertragen des mit den oben erläuterten Informationen zusammengestellten Daten-Paketes vom Task-Server an den Ziel-Server über die aufgebaute Verbindung ("Established"). Ein derartiger Prozess kann beispielsweise über den Unix-basierten Befehl scp erfolgen. Anschließend wird das Daten-Paket vom Task-Server an den Ziel-Server über das Netzwerk N der Computernetz-Infrastruktur übertragen und im Ziel-Server ausgewertet. Optional wird das Daten-Paket im Ziel-Server auf eine Gültigkeit hin überprüft. Hierzu können vorbestimmte Prüfschritte durchgeführt werden.

Im weiteren Verfahren erfolgt ein Freischalten der Quell-IP-Adresse, die dem Ziel-Server vermittels des Daten-Paketes als die externe Quell-IP-Adresse (die dem externen anfragenden Computersystem zugeordnet werden kann) bekannt ist (siehe oben). Hierzu schaltet der Ziel-Server in Richtung zum Internet/externen Intranet hin den Ziel-Netzwerk-Port frei, welcher mit der generierten zufälligen Portnummer im Daten-Paket des Task-Servers korrespondiert. Andere Netzwerk-Ports des Ziel-Servers bleiben für die betroffene IP-Adresse des externen Computersystems bzw. des NATs dauerhaft geschlossen und erlauben keine Ansprechbarkeit des Ziel-Servers von außen. Somit ist der Ziel-Server in diesem Stadium ausschließlich für einen Verbindungsaufbau ausgehend von der Quell-IP-Adresse (und nur von dieser) eines externen Computersystems selektiv an dem Ziel-Netzwerk-Port ansprechbar, der durch die im Task-Server generierte zufällige Portnummer bestimmt ist. Ferner erfolgt gegebenenfalls eine Portweiterleitung (Port Forwarding) vom freigeschalteten Ziel-Netzwerk-Port an einen Netzwerk-Port, der einem anzusprechenden Dienst oder einer anzusprechenden Applikation im Ziel-Server zugeordnet ist.

In einem folgenden Schritt 3, welcher vorteilhaft in einem fest vorgegebenen (kurzen) Zeitraum nach Freischalten des selektiven Ziel-Netzwerk-Ports am Ziel-Server erfolgen muss, baut nun das externe Computersystem, welches aus dem Internet/Intranet auf die Computernetz-Infrastruktur zugreifen kann, eine erneute Verbindung (neue Session mit der Kombination "externe bekannte Quell-IP-Adresse/ausgewählter Quell-Netzwerk-Port) zu dem geöffneten Ziel-Netzwerk-Port des Ziel-Servers auf. Falls beispielsweise in einem vorbestimmten Zeitraum kein solcher Verbindungsaufbau seitens des externen Computersystems erfolgt, wird der verfahrensgemäß selektiv geöffnete Ziel-Netzwerk-Port des Ziel-Servers für die betroffene IP-Adresse wieder geschlossen (sofern keine anderen externen Computersysteme mit derselben Quell-IP-Adresse im selben Zeitfenster anfragen), so dass der Ziel-Server für sämtliche externen Computersysteme mit derselben Quell-IP-Adresse nicht mehr ansprechbar ist (Initialzustand). Externe Computersysteme mit einer anderen IP-Adresse können hiervon unberührt während des gesamten Verfahrensablaufs keine Verbindung zum Ziel-Server aufbauen.

Anderenfalls - bei rechtzeitigem Verbindungsaufbau einer neuen Session - erfolgt über die somit aufgebaute ("established") Verbindung zwischen dem externen Computersystem (vermittels der bekannten Quell-IP-Adresse) und dem Ziel-Server ein nochmaliges Übertragen des Paares von signierten Zufallszahlen Z1 und Z2, die im externen Computersystem vorliegen, durch den (vorläufig) geöffneten Datenkanal unmittelbar an den nunmehr selektiv geöffneten Ziel-Server. Im Ziel-Server liegen daher nach Durchführen dieser Maßnahme zwei Paare von Zufallszahlen Z1 und Z2 vor, ein Paar übertragen vom Task-Server und ein Paar übertragen vom externen Computersystem.

Im Ziel-Server erfolgt dann eine Überprüfung der jeweiligen Zufallszahlen Z1 und Z2 der beiden Paare. Die Überprüfung kann eine Prüfung der Signaturen der Zufallszahlen auf die erwarteten Systeme bzw. Benutzer hin und/oder eine Überprüfung der entschlüsselten Werte der Zufallszahlen Z1 und Z2 auf Übereinstimmung umfassen. Die Überprüfung stellt eine Sicherheitsmaßnahme dar, dass die aufgebaute Verbindung tatsächlich von demjenigen externen Computersystem (und nur von diesem) initiiert worden ist, welches zuvor eine Freischaltung des Ziel-Servers angefragt hat, und nicht von einem anderen ggf. manipulierten Computersystem eines Angreifers mit der (zufällig) gleichen Quell-IP-Adresse. Auch etwaige Manipulationsversuche am Task-Server können durch eine Überprüfung der Zufallszahlen erkannt werden. Aufgrund der mehrfachen Signatur der Zufallszahlen Z1 und Z2 kann, wie oben erläutert, erkannt werden, bei welchem Transfer einer Zufallszahl eine Manipulation durchgeführt worden ist oder ein Fehler aufgetreten ist.

Insbesondere ist die Überprüfung eine Sicherheitsmaßnahme gegen Angreifer, die entweder hinter einem NAT-Router mit der im Ziel-Server freigeschalteten Quell-IP-Adresse sitzen und die Freischaltung für einen manipulierten Zugriff auf den Ziel-Server als Angriff ausnutzen wollen oder den Task-Server unter ihrer Kontrolle haben, um über diesen manipulativ in den Prozess der Freischaltung des Ziel-Servers einzugreifen. Aufgrund der Verschlüsselung der Zufallszahlen Z1 und Z2 sind die korrekten Werte der Zufallszahlen Z1 und Z2 für andere Computersysteme als den Ziel-Server nicht lesbar, ohne die Ebene der Verschlüsselung zu überwinden. Dadurch können Angreifer nur sehr schwer Kenntnis über die korrekten Werte der Zufallszahlen Z1 und Z2 erlangen. Selbst wenn ein Angreifer den Wert der Zufallszahl Z1, die im externen Computersystem erstellt worden ist, ermittelt, fehlt ihm immer noch der korrekte Wert der Zufallszahl Z2, welche im Task-Server generiert wurde. Umgekehrt fehlt einem Angreifer, welcher den Task-Server manipuliert hat, der Wert der Zufallszahl Z1, welche im externen Computersystem generiert wurde. Somit müsste ein Angreifer das externe Computersystem oder auch den Task-Server (oder beide) unter seine Kontrolle bringen und dadurch z.B. eine Verschlüsselung der Zufallszahlen überwinden oder eine Erstellung der Zufallszahlen generell kontrollieren, um Kenntnis von den Werten der Zufallszahlen Z1 und Z2 zur Manipulation des Verfahrens zu erlangen.

Der Ziel-Server selbst ist, wie oben ausführlich erläutert, aufgrund seiner in Richtung des Netzwerkes N hin dauerhaft geschlossenen Netzwerk-Ports gegen einen Angriff vom Task-Server aus abgesichert. In Richtung des Internets/Intranets, von dem aus ein externes Computersystem eine Verbindung zum Ziel-Server aufbauen könnte, ist ein Zugriff auf den Ziel-Server, wie ebenfalls oben erläutert, auf die vorbestimmte Quell-IP-Adresse, gegebenenfalls einen vorbestimmten Zeit Slot, und den Ziel-Netzwerk-Port beschränkt, welcher mit der im Task-Server generierten zufälligen Portnummer korrespondiert. Eine Wahrscheinlichkeit eines Angriffs von extern ist bereits aufgrund dieser Umstände sehr gering. Durch den erläuterten Prozess des Austausches der Zufallszahlen Z1 und Z2 zwischen den beteiligten Computersystemen und aufgrund einer Überprüfung dieser Zufallszahlen im Ziel-Server wird eine Wahrscheinlichkeit einer erfolgreichen Manipulation des Prozesses in der Computernetz-Infrastruktur zur Erlangung eines Zugriffs auf den Ziel-Server weiter reduziert.

Wenn die Überprüfung der Paare von Zufallszahlen Z1 und Z2 negativ ausfällt, geht der Ziel-Server von einem Fehlerfall bzw. von einem Manipulationsversuch aus, bricht seinerseits die durch das externe Computersystem aufgebaute Verbindung zu seinem selektiv freigeschalteten Ziel-Netzwerk-Port aus Sicherheitsgründen unmittelbar ab und schließt sowohl die selektiv freigeschaltete Kombination Quell-IP/Quell-Port/Ziel-Port sowie das hierfür bestehende Port Forwarding zu dem Port, auf dem der angesprochene Dienst (z.B. VPN) des Ziel-Servers real läuft. Dann befindet sich der Ziel-Server wieder im Initialzustand (erläuterter Zustand vor der Freischaltung) und lässt für keinerlei Computersystem über Netzwerk einen Verbindungsaufbau zu.

Wenn die Überprüfung der Paare von Zufallszahlen Z1 und Z2 durch den Ziel-Server erfolgreich abgeprüft worden ist, erfolgt eine Beschränkung der aufgebauten Verbindung ausschließlich auf die Kombination der freigeschalteten Quell-IP-Adresse in Verbindung mit dem Quell-Netzwerk-Port, von denen aus durch das externe Computersystem die unmittelbare Verbindung zum freigeschalteten Ziel-Netzwerk-Port des Ziel-Servers aufgebaut worden ist. Auf diese Weise beschränkt der Ziel-Server die aufgebaute Verbindung nicht nur auf die Quell-IP-Adresse, sondern auch auf die tatsächliche Quell-Verbindung via verwendetem Quell-Netzwerk-Port des autorisierten externen Computersystems. Weitere Verbindungen über die gleiche Quell-IP-Adresse, aber über andere Quell-Netzwerk-Ports auf den Ziel-Server werden dadurch unterbunden. Auch auf diese Weise werden mögliche Angriffsszenarien deutlich erschwert beziehungsweise unterbunden. Bei diesen Maßnahmen ist zu berücksichtigen, dass ggf. parallel stattfindende Verbindungsaufbauten mehrerer externer Computersysteme sich nicht gegenseitig beeinträchtigen.

Nach diesem Procedere steht somit lediglich eine selektiv aufgebaute Verbindung zwischen dem Quell-Netzwerk-Port des externen Computersystems (womöglich via maskiertem Quell-Netzwerk-Port eines NAT-Routers) und einem selektiv freigeschalteten Ziel-Netzwerk-Port am Ziel-Server. Im Weiteren kann dann eine applikationsspezifische Kommunikation vermittels dieser eingeschränkten Verbindung zwischen dem externen Computersystem und dem Ziel-Server innerhalb der Computernetz-Infrastruktur erfolgen.

Auf diese Weise hat das externe Computersystem über das erläuterte Verfahren eine selektive Freischaltung des Ziel-Servers für eine spezifische Kommunikation erwirkt. Dennoch ist das Verfahren im Gegensatz zu herkömmlichen Maßnahmen deutlich sicherer gegen Angriffe von außen. Insbesondere die erfolgreiche Ausnutzung von Sicherheitslücken im Ziel-Server, zum Beispiel von Zero-Day-Exploits, wird durch die für jede einzelne Freischaltung bestimmte zufällige Portnummer zur Freischaltung des korrespondierenden Netzwerk-Ports im Ziel-Server extrem unwahrscheinlich. Das bedeutet, dass einzelne Sicherheitslücken in der erläuterten Computernetz-Infrastruktur keine attraktive Angriffsmöglichkeit mehr bilden.

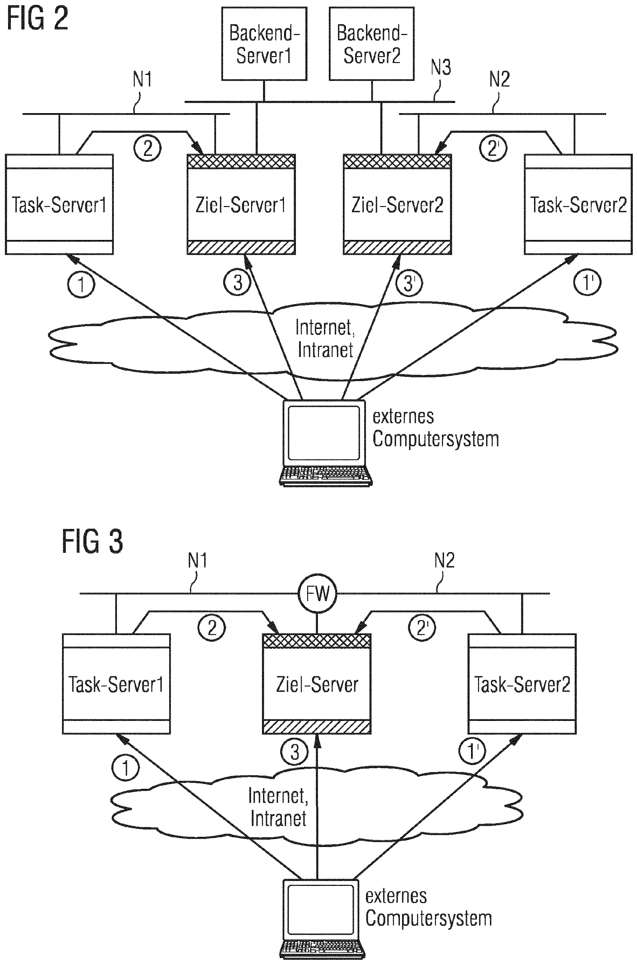

Figur 2 zeigt eine schematisierte Darstellung zumindest eines Teils einer Computernetz-Infrastruktur gemäß einer zweiten Konfiguration. Die Computernetz-Infrastruktur gemäß Figur 2 weist einen Task-Server 1 sowie einen Ziel-Server 1 auf, welche über ein Netzwerk N1 verbunden sind. Ferner weist die Computernetz-Infrastruktur einen Task-Server 2 sowie einen Ziel-Server 2 auf, die über ein separates Netzwerk N2 verbunden sind. Der Ziel-Server 1 sowie der Ziel-Server 2 sind wiederum über ein drittes separates Netzwerk N3 mit im Hintergrund arbeitenden Backend-Servern 1 und 2 verbunden. Ziel-Server 1 und/oder Ziel-Server 2 können beispielsweise als VPN-Server eingerichtet sein zum jeweiligen Freischalten einer selektiven VPN-Verbindung zu einem externen Computersystem. Auf den Backend-Servern 1 und 2 können beispielsweise applikationsabhängige Dienste eingerichtet sein, auf welche die Ziel-Server 1 und 2 jeweils zugreifen können oder an welche die Ziel-Server 1 und 2 eine externe Verbindung von einem externen Computersystem aus weitervermitteln können, damit das externe Computersystem derartige Dienste nutzen kann.

Bezüglich der Task-Server und der Ziel-Server zeigt Figur 2 einen parallelen und redundanten Aufbau der entsprechenden Komponenten gemäß Figur 1. Das bedeutet, dass Task-Server 1 und 2 sowie Ziel-Server 1 und 2 im Wesentlichen mit redundanter Funktionalität ausgelegt sind. Ein externes Computersystem kann, wie bei der Konstellation in Figur 1, über Internet/externes Intranet eine Verbindung zu Task-Server 1 aufbauen und entsprechende Maßnahmen gemäß dem zu Figur 1 erläuterten Verfahren einleiten (vergleiche oben erläuterte Schritte 1 bis 3), so dass schlussendlich eine Verbindung zwischen dem externen Computersystem und dem Ziel-Server 1 aufgebaut und genutzt werden kann. Für diese Maßnahmen sei auf die Erläuterungen zu Figur 1 verwiesen.

Falls eine Kommunikation zum Task-Server 1 und/oder zum Ziel-Server 1 zum Beispiel aufgrund von Angriffen auf die Computernetz-Infrastruktur und/oder aufgrund von Defekten gestört bzw. unterbunden ist, kann das externe Computersystem stattdessen eine Verbindung zum Task-Server 2 aufbauen und entsprechende Maßnahmen zum Freischalten einer Verbindung zwischen dem externen Computersystem und dem Ziel-Server 2 einleiten. Dies erfolgt in einem Prozess mit den Schritten 1' bis 3', welche im Wesentlichen den Schritten 1 bis 3 bezüglich einer Kommunikation des externen Computersystems mit Task-Server 1 und Ziel-Server 1 gemäß dem oben erläuterten Verfahren entsprechen. Auch in Bezug auf diese Maßnahmen sei auf die Erläuterungen zu Figur 1 analog verwiesen (mit dem Unterschied, dass der Prozess zwischen dem externen Computersystem, Task-Server 2 und Ziel-Server 2 durchgeführt wird). Auf diese Weise besteht bei der Konfiguration gemäß Figur 2 eine geringere Abhängigkeit von einem angreifbaren System (zum Beispiel Task-Server 1 alleine). Vielmehr erlaubt die redundante Auslegung der Computernetz-Infrastruktur gemäß Figur 2 eine flexiblere Handhabung einer Anfrage eines externen Computersystems zur Freischaltung einer Kommunikation mit einem entsprechenden Ziel-Server.

Im Normalbetrieb der Computernetz-Infrastruktur ist es auch denkbar, dass ein externes Computersystem einen der Task-Server 1 oder 2 zufällig ermittelt, den es dann entsprechend über einen Verbindungsweg 1 bzw. 1' anspricht. Ferner ist in der Konfiguration gemäß Figur 2 über den doppelten bzw. redundanten Aufbau des Task-Server/Ziel-Server-Paares und dem wechselnden Ansprechen der Task-Server 1 oder 2 bzw. anschließend der zugeordneten Ziel-Server 1 oder 2 eine Hochverfügbarkeit und Lastverteilung realisiert. Die in Figur 2 dargestellte Topologie kann natürlich durch weitere Task-Server und/oder Ziel-Server ausgebaut und/oder durch veränderte Kommunikationsbeziehungen variiert werden. Optional ist auch denkbar, eine Topologie einzurichten, in der die Backend-Server 1 und 2 wegfallen.

Figur 3 zeigt eine schematisierte Darstellung zumindest eines Teils einer Computernetz-Infrastruktur gemäß einer dritten Konfiguration. Diese stellt gewissermaßen eine Alternativlösung aus der Konfiguration gemäß Figur 1 und der Konfiguration gemäß Figur 2 dar. Die Computernetz-Infrastruktur gemäß Figur 3 umfasst einen ersten Task-Server 1 und einen zweiten Task-Server 2. Diese beiden Task-Server können jeweils aus dem Internet/externen Intranet von einem externen Computersystem aus gemäß dem oben erläuterten Verfahren angesprochen werden. Ferner umfasst die Computernetz-Infrastruktur einen einzigen Ziel-Server. Wie in Figur 1 und 2 kann der Ziel-Server auch in der Topologie gemäß Figur 3 ein VPN-Server sein. Task-Server 1 ist über ein erstes Netzwerk N1 mit dem Ziel-Server verbunden. Task-Server 2 ist über ein zweites Netzwerk N2 ebenfalls mit dem Ziel-Server verbunden.

Ähnlich wie in der Topologie gemäß Figur 2 sind die Task-Server 1 und 2 redundant ausgelegt. Ein externes Computersystem kann über die oben erläuterten Maßnahmen in den Schritten 1 bis 3 vermittels des Task-Servers 1 die Freischaltung des entsprechenden Netzwerk-Ports im Ziel-Server erreichen, um eine externe Verbindung zum Ziel-Server aufzubauen. Alternativ kann das externe Computersystem über die oben erläuterten Maßnahmen in den Schritten 1', 2' und 3 auch vermittels des Task-Servers 2 die Freischaltung des entsprechenden Netzwerk-Ports im Ziel-Server erreichen, um eine externe Verbindung zum Ziel-Server aufzubauen. Zu den entsprechenden Maßnahmen sei auf die obigen Erläuterungen im Zusammenhang mit den Figuren 1 und 2 verwiesen.

Die Computernetz-Infrastruktur aus Figur 3 weist neben den genannten Komponenten zusätzlich einen optionalen Paket-Filter FW auf, welcher in den entsprechenden Netzwerken N1 und N2 zwischen die Task-Server 1 und 2 und den Ziel-Server geschaltet ist. Der Paket-Filter FW ist als Sicherheitsmaßnahme gegen Angriffe innerhalb der Computernetz-Infrastruktur eingerichtet. Der Paket-Filter FW dient im Wesentlichen der Vereitelung eines Angriffs auf den Ziel-Server ausgehend vom einem oder beiden der Task-Server 1 und 2. Ein Eindringling, der in Task-Server 1 oder 2 entsprechende Rechte (z. B. Administrator-Rechte) erlangt hat, hätte die Möglichkeit eines Angriffs auf den Ziel-Server mittels einer Fälschung einer IP-Adresse, ausgehend von Task-Server 1 oder 2, um sich beispielsweise als externer Client mit einer autorisierten externen IP-Adresse auszugeben (IP-Spoofing). So könnte ein optionaler Port-Filter auf dem Ziel-Server (der keinen Verbindungsaufbau von anderen Computersystemen zulässt) umgangen werden. Auf diese Weise könnte ausgehend von Task-Server 1 oder 2 über eine gefälschte IP-Adresse ein autorisierter Zugang zum Ziel-Server vorgetäuscht werden.

Als Gegenmaßnahme ist der Paket-Filter FW eingerichtet, der in der jeweiligen Kommunikationsrichtung von Task-Server 1 bzw. 2 zum Ziel-Server vorteilhaft lediglich Daten-Pakete einer bereits durch den Ziel-Server aufgebauten Verbindung ("Established" oder "Related") zulässt, die die exakte IP-Adresse des jeweiligen Task-Servers 1 oder 2 verwendet. Andere Daten-Pakete werden am Paket-Filter FW in der entsprechenden Kommunikationsrichtung verworfen beziehungsweise ignoriert und nicht weitergeleitet. Somit gelangen zum Ziel-Server lediglich Daten-Pakete, die verlässlich und vertrauenswürdig von Task-Server 1 oder 2 stammen. IP-Spoofing wird dadurch extrem erschwert beziehungsweise unterbunden.

In umgekehrter Kommunikationsrichtung vom Ziel-Server hin zu den Task-Servern 1 oder 2 kann der Paket-Filter FW vorteilhaft lediglich Daten-Pakete zulassen, die einen speziellen Dienst an den Task-Servern 1 oder 2 (z. B. scp oder ssh oder eine Kombination davon, usw.) ansprechen.

Auf diese Weise sind die Task-Server 1 und 2 in Richtung Ziel-Server gänzlich abgeschnitten, so dass kein Angriff ausgehend vom Task-Server auf den Ziel-Server erfolgreich ist. In umgekehrter Richtung kann der Ziel-Server jedoch wie gemäß Figur 1 erläutert beispielsweise ein Daten-Paket, enthaltend die generierte zufällige Portnummer und/oder eine Quell-IP-Adresse des externen Computersystems, über den Dienst scp vom entsprechenden Task-Server 1 oder 2 abholen.

Der Paket-Filter FW gemäß Figur 3 kann beispielsweise als speziell abgesicherter 1:1 NAT-Router (IP-Adress-Umsetzer) realisiert sein. Es ist auch denkbar, in diesem Router spezielle Überprüfungsmechanismen vorzusehen. Bei 1:1 NAT-Routing werden IP-Adressen eingehender Pakete statisch in andere IP-Adressen umgesetzt. Beispielsweise könnte ein eingehendes Paket mit der beispielhaften Adresse 10.10.10.10 in die IP-Adresse 11.11.11.11 umgesetzt werden.

Das hier dargestellte Verfahren hat den Vorteil, dass ein Freischalten externer Computersysteme für eine Kommunikation mit einem abgesicherten Bearbeitungs-Computersystem innerhalb einer Computernetz-Infrastruktur auf sichere Art und Weise möglich ist, ohne das Bearbeitungs-Computersystem (auch) für externe oder interne Angreifer zu öffnen.

Das beschriebene Verfahren kann sowohl für IPv4 als auch für IPv6 verwendet werden. Andere Übertragungsprotokolle können ebenfalls mit diesem Verfahren abgesichert werden. Die Installation eines entsprechenden Computerprogramms zur Durchführung des Verfahrens auf einem externen Client (externes Computersystem) kann auf einem "echten" Client als auch auf einem hierzu speziell vorgesehenen System, welches die entsprechende Freischaltung vornimmt, implementiert werden. Die Verwendung eines speziellen Systems hat den Vorteil, dass es auf diese Funktionalität begrenzt und speziell abgesichert werden kann. Damit wird eine erhöhte Sicherheit ermöglicht.

Die Größe eines Anweisungs-Paketes, welches vom externen Computersystem zu einem Vermittlungs-Computersystem (Task-Server) übertragen wird, kann vorteilhaft begrenzt sein. Dies hat den Vorteil, dass ein Angreifer, der die generelle Schicht einer Verschlüsselung eines Anweisungs-Paketes überwunden hat, die Funktionalität des Vermittlungs-Computersystems nicht durch einen Speicherüberlauf behindern kann. Dasselbe gilt auch für andere verwendete Übertragungsverfahren bzw. Kommunikationen.

In nicht dargestellten Ausführungsformen ist es auch denkbar, in einem Verbindungspfad zwischen dem externen Computersystem und einem Task-Server bzw. einem Ziel-Server eine weitere Firewall bzw. Paketfilter (zum Beispiel integriert in einem Router) einzurichten. Diese Firewall bzw. Paketfilter kann vorteilhaft derart eingerichtet sein, dass eine Adress-Weiterleitung und/oder Port-Weiterleitung eines Verbindungsaufbaus vom externen Computersystem in die Computernetz-Infrastruktur zu den entsprechenden Task-Servern bzw. Ziel-Servern durchgeführt wird. Dies hat den Vorteil, dass ein externes Computersystem für eine verfahrensgemäße Freischaltung einer Verbindung zu einem entsprechenden Ziel-Server lediglich eine IP-Adresse zur Ansprechbarkeit der Firewall verwenden kann, ohne zwischen einer oder mehreren IP-Adressen von Task-Servern und einer oder mehreren IP-Adressen von Ziel-Servern unterscheiden zu müssen. Hierbei muss beachtet werden, dass Quell-Netzwerk-Port und Quell-IP-Adresse der Verbindungsaufbauten vom externen Computersystem zu einem Task-Server bzw. Ziel-Server nicht überschrieben werden und an beiden Computersystemen vorliegen.

Die dargestellten Ausführungsbeispiele einer Computernetz-Infrastruktur sind lediglich beispielhaft gewählt. Es ist beispielsweise denkbar, Topologien einer Computernetz-Infrastruktur vorzusehen, die Komponenten aus den dargestellten Ausführungsbeispielen miteinander kombinieren.

### Bezugszeichenliste

- Task-Server: Vermittlungs-Computersystem
- Task-Server 1: Vermittlungs-Computersystem
- Task-Server 2: Vermittlungs-Computersystem
- Ziel-Server: Bearbeitungs-Computersystem
- Ziel-Server 1: Bearbeitungs-Computersystem
- Ziel-Server 2: Bearbeitungs-Computersystem
- N, N1, N2, N3: Netzwerk
- FW: Paket-Filter, Firewall
- 1 bis 3: Verfahrensschritte
- 1' bis 3': Verfahrensschritte

## Patentansprüche

1. Verfahren zum Freischalten externer Computersysteme für eine Kommunikation mit abgesicherten Bearbeitungs-Computersystemen in einer Computernetz-Infrastruktur, umfassend die Schritte:
- Übertragen eines Anweisungs-Paketes von einem externen Computersystem, welches außerhalb der Computernetz-Infrastruktur eingerichtet ist, an ein Vermittlungs-Computersystem innerhalb der Computernetz-Infrastruktur,
- Generieren einer zufälligen Portnummer eines Netzwerk-Ports durch das Vermittlungs-Computersystem,
- automatisiertes Übertragen der zufälligen Portnummer vom Vermittlungs-Computersystem an das externe Computersystem sowie an zumindest ein Bearbeitungs-Computersystem innerhalb der Computernetz-Infrastruktur,
wobei das Bearbeitungs-Computersystem gegenüber dem externen Computersystem zumindest vorübergehend vorbestimmte Netzwerk-Ports geschlossen hält, so dass ein Zugriff auf das Bearbeitungs-Computersystem durch das externe Computersystem über Netzwerk vermittels dieser Netzwerk-Ports verhindert wird,
- Generieren und Verschlüsseln einer ersten Zufallszahl durch das externe Computersystem derart, dass nur das Bearbeitungs-Computersystem diese entschlüsseln kann,
- Übertragen der ersten verschlüsselten Zufallszahl vom externen Computersystem auf das Vermittlungs-Computersystem,
- Generieren und Verschlüsseln einer zweiten Zufallszahl durch das Vermittlungs-Computersystem derart, dass nur das Bearbeitungs-Computersystem diese entschlüsseln kann,
- Übertragen der zweiten verschlüsselten Zufallszahl vom Vermittlungs-Computersystem auf das externe Computersystem sowie
- Übertragen der ersten und zweiten verschlüsselten Zufallszahl vom Vermittlungs-Computersystem auf das Bearbeitungs-Computersystem,
- Freischalten des zur zufälligen Portnummer korrespondierenden Netzwerk-Ports durch das Bearbeitungs-Computersystem für eine Kommunikation mit dem externen Computersystem,
- Aufbauen einer Verbindung zum freigeschalteten Netzwerk-Port des Bearbeitungs-Computersystems durch das externe Computersystem,
- Begrenzen der Kommunikation zwischen dem Bearbeitungs-Computersystem und dem externen Computersystem auf den freigeschalteten Netzwerk-Port des Bearbeitungs-Computersystems und einen Netzwerk-Port des externen Computersystems, der dem Bearbeitungs-Computersystem durch die aufgebaute Verbindung bekannt ist,
- Übertragen der ersten und zweiten verschlüsselten Zufallszahl vom externen Computersystem unmittelbar auf das Bearbeitungs-Computersystem vermittels der aufgebauten Verbindung,
- Entschlüsseln der ersten und zweiten verschlüsselten Zufallszahl, die durch das Vermittlungs-Computersystem auf das Bearbeitungs-Computersystem übertragen wurden, im Bearbeitungs-Computersystem und Entschlüsseln der ersten und zweiten verschlüsselten Zufallszahl, die durch das externe Computersystem auf das Bearbeitungs-Computersystem übertragen wurden, im Bearbeitungs-Computersystem sowie
- Prüfen einer jeweiligen Übereinstimmung der entschlüsselten ersten und zweiten Zufallszahl, die durch das Vermittlungs-Computersystem auf das Bearbeitungs-Computersystem übertragen wurden, mit der entschlüsselten ersten und zweiten Zufallszahl, die durch das externe Computersystem unmittelbar auf das Bearbeitungs-Computersystem übertragen wurden, im Bearbeitungs-Computersystem.

2. Verfahren nach Anspruch 1, wobei das Bearbeitungs-Computersystem gegenüber dem Vermittlungs-Computersystem zumindest vorübergehend vorbestimmte Netzwerk-Ports geschlossen hält, so dass ein Zugriff auf das Bearbeitungs-Computersystem durch das Vermittlungs-Computersystem über Netzwerk vermittels dieser Netzwerk-Ports verhindert wird, wobei jedoch das Bearbeitungs-Computersystem auf das Vermittlungs-Computersystem zugreifen kann, um die zufällige Portnummer und/oder andere Informationen vom Vermittlungs-Computersystem abzuholen.

3. Verfahren nach Anspruch 1 oder 2, aufweisend die folgenden weiteren Maßnahmen:
- Beschränken der durch das externe Computersystem zum selektiv freigeschalteten Netzwerk-Port des Bearbeitungs-Computersystems aufgebauten Verbindung auf einen Austausch von Authentifizierungs-Informationen zwischen dem externen Computersystem und dem Bearbeitungs-Computersystem,
- Prüfen von durch das externe Computersystem übertragenen Authentifizierungs-Informationen,
- Freigeben der durch das externe Computersystem zum selektiv freigeschalteten Netzwerk-Port des Bearbeitungs-Computersystems aufgebauten Verbindung für einen erweiterten Zugriff auf das Bearbeitungs-Computersystem oder auf weitere Bearbeitungs-Computersysteme innerhalb der Computernetz-Infrastruktur, falls das Prüfen der Authentifizierungs-Informationen erfolgreich war.

4. Verfahren nach einem der Ansprüche 1 bis 3, wobei die erste Zufallszahl vor dem Übertragen mit einer Signatur des externen Computersystems signiert wird und wobei die im Vermittlungs-Computersystem generierte zweite Zufallszahl vor dem Übertragen mit einer Signatur des Vermittlungs-Computersystems signiert wird.

5. Verfahren nach Anspruch 4, wobei nach Übertragen der signierten ersten Zufallszahl vom externen Computersystem an das Vermittlungs-Computersystem die Signatur der ersten Zufallszahl mit einer weiteren Signatur des Vermittlungs-Computersystems signiert wird und
wobei nach Übertragen der signierten zweiten Zufallszahl vom Vermittlungs-Computersystem an das externe Computersystem die Signatur der zweiten Zufallszahl mit einer weiteren Signatur des externen Computersystems signiert wird.

6. Verfahren nach einem der Ansprüche 1 bis 5, wobei die Verbindung zwischen dem externen Computersystem und dem Bearbeitungs-Computersystem durch das Bearbeitungs-Computersystem abgebaut wird, wenn das Prüfen der jeweiligen Übereinstimmung der ersten und zweiten Zufallszahlen negativ ist.

7. Verfahren nach einem der Ansprüche 2 bis 6, wobei das Übertragen der zufälligen Portnummer oder anderer Informationen vom Vermittlungs-Computersystem auf das Bearbeitungs-Computersystem die folgenden Schritte umfasst:
- Senden einer vorbestimmten Daten-Sequenz vom Vermittlungs-Computersystem oder vom externen Computersystem an das Bearbeitungs-Computersystem, wobei die vorbestimmten Netzwerk-Ports des Bearbeitungs-Computersystems geschlossen sind und wobei die Sequenz in einer vorbestimmten Reihenfolge einen oder mehrere Netzwerk-Ports des Bearbeitungs-Computersystems anspricht,
- Überprüfen der gesendeten Daten-Sequenz auf Übereinstimmung mit einer vordefinierten Sequenz im Bearbeitungs-Computersystem, sowie
- Veranlassen des Übertragens der zufälligen Portnummer oder anderer Informationen durch das Bearbeitungs-Computersystem, falls die Überprüfung der gesendeten Sequenz positiv ist, wobei das Bearbeitungs-Computersystem seinerseits eine Verbindung zum Vermittlungs-Computersystem aufbaut und die zufällige Portnummer oder andere Informationen vom Vermittlungs-Computersystem abholt.

8. Verteiltes Rechnernetz mit
- einer Computernetz-Infrastruktur, welche zumindest ein Vermittlungs-Computersystem und ein Bearbeitungs-Computersystem umfasst, und
- zumindest einem externen Computersystem, welches sich außerhalb der Computernetz-Infrastruktur befindet,
wobei das externe Computersystem eingerichtet ist, ein Anweisungs-Paket an das Vermittlungs-Computersystem zu übertragen zur Anweisung einer Kommunikation mit dem Bearbeitungs-Computersystem, eine erste Zufallszahl zu generieren und derart zu verschlüsseln, dass nur das Bearbeitungs-Computersystem diese entschlüsseln kann, und die verschlüsselte erste Zufallszahl auf das Vermittlungs-Computersystem zu übertragen,
wobei das Vermittlungs-Computersystem eingerichtet ist, automatisiert eine zufällige Portnummer eines Netzwerk-Ports zu generieren und die zufällige Portnummer sowohl an das Bearbeitungs-Computersystem als auch an das externe Computersystem zu übertragen, eine zweite Zufallszahl zu generieren und derart zu verschlüsseln, dass nur das Bearbeitungs-Computersystem diese entschlüsseln kann, und die verschlüsselte zweite Zufallszahl auf das externe Computersystem zu übertragen und
wobei das Bearbeitungs-Computersystem eine Zugriffssteuereinheit aufweist, die eingerichtet ist, zumindest vorübergehend vorbestimmte Netzwerk-Ports geschlossen zu halten, so dass ein Zugriff auf das Bearbeitungs-Computersystem durch das externe Computersystem über ein Netzwerk vermittels dieser Netzwerk-Ports verhindert ist, jedoch ein Verbindungsaufbau zwischen dem Bearbeitungs-Computersystem und dem Vermittlungs-Computersystem erlaubt ist, um die zufällige Portnummer oder andere Informationen auszutauschen,
wobei die Zugriffssteuereinheit ferner eingerichtet ist, einen zur zufälligen Portnummer korrespondierenden Netzwerk-Port für eine Kommunikation mit dem externen Computersystem freizuschalten und nach Aufbauen einer Verbindung zum selektiv freigeschalteten Netzwerk-Port des Bearbeitungs-Computersystems die Kommunikation zwischen dem Bearbeitungs-Computersystem und dem externen Computersystem auf den freigeschalteten Netzwerk-Port des Bearbeitungs-Computersystems und einen Netzwerk-Port des externen Computersystems zu begrenzen, der dem Bearbeitungs-Computersystem durch die aufgebaute Verbindung bekannt ist, wobei das Vermittlungs-Computersystem ferner eingerichtet ist, die verschlüsselte erste und zweite Zufallszahl auf das Bearbeitungs-Computersystem zu übertragen,
wobei das externe Computersystem ferner eingerichtet ist, die verschlüsselte erste und zweite Zufallszahl unmittelbar vermittels der aufgebauten Verbindung auf das Bearbeitungs-Computersystem zu übertragen, und
wobei das Bearbeitungs-Computersystem ferner eingerichtet ist, die jeweils vom Vermittlungs-Computersystem und vom externen Computersystem übertragene verschlüsselte erste und zweite Zufallszahl zu entschlüsseln und eine jeweilige Übereinstimmung der entschlüsselten ersten und zweiten Zufallszahl, die durch das Vermittlungs-Computersystem auf das Bearbeitungs-Computersystem übertragen wurden, mit der entschlüsselten ersten und zweiten Zufallszahl, die durch das externe Computersystem unmittelbar auf das Bearbeitungs-Computersystem übertragen wurden, zu prüfen.

9. Verteiltes Rechnernetz nach Anspruch 8, welches eingerichtet ist, ein Verfahren nach einem der Ansprüche 1 bis 7 durchzuführen.

10. Computerprogramm-Produkt, welches eingerichtet ist, auf einem oder mehreren Computersystemen ausgeführt zu werden und welches bei Ausführung ein Verfahren nach einem der Ansprüche 1 bis 7 durchführt.

## Claims

1. A method of enabling external computer systems for a communication with protected processing computer systems in a computer network infrastructure, comprising the steps of:
- transferring an instruction package from an external computer system, which is arranged outside the computer network infrastructure, to a relaying computer system within the computer network infrastructure,
- generating a random port number of a network port by the relaying computer system,
- transferring the random port number from the relaying computer system to the external computer system as well as to at least one processing computer system within the computer network infrastructure in an automated manner,
wherein the processing computer system keeps predetermined network ports at least temporarily closed with regard to the external computer system so that access to the processing computer system by the external computer system via network through these network ports is prevented,
- generating and encrypting a first random number by the external computer system in such a manner that only the processing computer system is able to decrypt it,
- transferring the first encrypted random number from the external computer system to the relaying computer system,
- generating and encrypting a second random number by the relaying computer system in such a manner that only the processing computer system is able to decrypt it,
- transferring the second encrypted random number from the relaying computer system to the external computer system, and
- transferring the first and second encrypted random numbers from the relaying computer system to the processing computer system,
- enabling the network port corresponding to the random port number by the processing computer system for a communication with the external computer system,
- establishing a connection to the enabled network port of the processing computer system by the external computer system,
- limiting the communication between the processing computer system and the external computer system to the enabled network port of the processing computer system and a network port of the external computer system, which is known to the processing computer system by the established connection,
- transferring the first and second encrypted random numbers from the external computer system directly to the processing computer system by means of the established connection,
- decrypting the first and second encrypted random numbers, which have been transferred by the relaying computer system to the processing computer system, in the processing computer system, and decrypting the first and second encrypted random numbers, which have been transferred by the external computer system to the processing computer system, in the processing computer system, and
- checking a respective correspondence of the decrypted first and second random number, which have been transferred by the relaying computer system to the processing computer system, with the decrypted first and second random number, which have been transferred by the external computer system directly to the processing computer system, in the processing computer system.

2. The method according to claim 1, wherein the processing computer system keeps predetermined network ports at least temporarily closed with regard to the external computer system so that access to the processing computer system by the relaying computer system via network by means of these network ports is prevented, but wherein the processing computer system is allowed to access the relaying computer system in order to retrieve the random port number and/or other information from the relaying computer system.

3. The method according to claim 1 or 2, comprising the following further measures:
- restricting the connection to the selectively enabled network port of the processing computer system established by the external computer system to an exchange of authentication information between the external computer system and the processing computer system,
- checking of authentication information transferred by the external computer system,
- enabling the connection to the selectively enabled network port of the processing computer system established by the external computer system for an extended access to the processing computer system or to further processing computer systems within the computer network infrastructure, if the checking of the authentication information has been successful.

4. The method according to any of the claims 1 to 3, wherein the first random number is signed with a signature of the external computer system prior to the transferring process, and wherein the second random number generated in the relaying computer system is signed with a signature of the relaying computer system prior to the transferring process.

5. The method according to claim 4, wherein, after the transferring of the signed first random number from the external computer system to the relaying computer system, the signature of the first random number is signed with a further signature of the relaying computer system and
wherein, after the transferring of the signed second random number from the relaying computer system to the external computer system, the signature of the second random number is signed with a further signature of the external computer system.

6. The method according to any of the claims 1 to 5, wherein the connection between the external computer system and the processing computer system is terminated by the processing computer system if the checking of the respective correspondence of the first and second random number is negative.

7. The method according to any of the claims 2 to 6, wherein the transferring of the random port number or other information from the relaying computer system to the processing computer system comprises the following steps:
- sending a predetermined data sequence from the relaying computer system or from the external computer system to the processing computer system, wherein the predetermined network ports of the processing computer system are closed and wherein the sequence addresses one or more network ports of the processing computer system in a predetermined order,
- verifying the sent data sequence for any correspondence with a predefined sequence in the processing computer system, and
- causing the random port number or other information to be transferred by the processing computer system, if the verification of the sent sequence is positive, wherein the processing computer system establishes for its part a connection to the relaying computer system and retrieves the random port number or other information from the relaying computer system.

8. A distributed computer network, comprising
- a computer network infrastructure which includes at least one relaying computer system and a processing computer system, and
- at least one external computer system which is located outside the computer network infrastructure,
wherein the external computer system is arranged to transfer an instruction package to the relaying computer system for instructing a communication with the processing computer system, to generate a first random number and to encrypt it in such a way that only the processing computer system is able to decrypt it, and to transfer the encrypted first random number to the relaying computer system,
wherein the relaying computer system is arranged to generate a random port number of a network port in an automated manner and to transfer the random port number both to the processing computer system and to the external computer system, to generate a second random number and encrypt it in such a manner that only the processing computer system is able to decrypt it, and to transfer the encrypted second random number to the external computer system and
wherein the processing computer system comprises an access control unit which is arranged to keep predetermined network ports at least temporarily closed, so that access to the processing computer system by the external computer system via a network by means of these network ports is prevented, but an establishment of a connection between the processing computer system and the relaying computer system is allowed for exchanging the random port number or other information,
wherein the access control unit is further arranged to enable a network port corresponding to the random port number for a communication with the external computer system and, after establishing a connection to the selectively enabled network port of the processing computer system, to limit the communication between the processing computer system and the external computer system to the enabled network port of the processing computer system and a network port of the external computer system, which is known to the processing computer system by the established connection,
wherein the relaying computer system is further arranged to transfer the encrypted first and second random number to the processing computer system,
wherein the external computer system is further arranged to transfer the encrypted first and second random number by means of the established connection directly to the processing computer system, and
wherein the processing computer system is further arranged to decrypt the encrypted first and second random number transferred by the relaying computer system and by the external computer system, respectively, and to check a respective correspondence of the decrypted first and second random number, which have been transferred by the relaying computer system to the processing computer system, with the decrypted first and second random number, which have been transferred by the external computer system directly to the processing computer system.

9. The distributed computer network according to claim 8, which is arranged to carry out a method according to any of the claims 1 to 7.

10. A computer program product which is arranged to be executed on one or more computer systems and, when executed, carries out a method according to any of the claims 1 to 7.

## Revendications

1. Procédé pour activer des systèmes informatiques externes pour une communication avec des systèmes informatiques de traitement sécurisés dans une infrastructure de réseau informatique, comprenant les étapes suivantes consistant à:
- transmettre un paquet d'instructions à partir d'un système informatique externe, qui est configuré en dehors de l'infrastructure de réseau informatique, à un système informatique de commutation au sein de l'infrastructure de réseau informatique,
- générer un numéro de port aléatoire d'un port de réseau par le système informatique de commutation,
- transmettre de manière automatisée le numéro de port aléatoire du système informatique de commutation au système informatique externe ainsi qu'à au moins un système informatique de traitement au sein de l'infrastructure de réseau informatique,
sachant que le système informatique de traitement maintient fermés, au moins temporairement, des ports de réseau prédéterminés vis-à-vis du système informatique externe, de telle sorte qu'un accès au système informatique de traitement par le système informatique externe via le réseau au moyen de ces ports de réseau est empêché,
- générer et crypter un premier nombre aléatoire par le système informatique externe de telle sorte que seul le système informatique de traitement puisse décrypter celui-ci,
- transmettre le premier nombre aléatoire crypté depuis le système informatique externe vers le système informatique de commutation,
- générer et crypter un deuxième nombre aléatoire par le système informatique de commutation de telle sorte que seul le système informatique de traitement puisse décrypter celui-ci,
- transmettre le deuxième nombre aléatoire crypté depuis le système informatique de commutation vers le système informatique externe, ainsi que
- transmettre les premier et deuxième nombres aléatoires cryptés depuis le système informatique de commutation vers le système informatique de traitement,
- activer le port de réseau correspondant au numéro de port aléatoire par le système informatique de traitement pour une communication avec le système informatique externe,
- établir une connexion avec le port de réseau activé du système informatique de traitement par le système informatique externe,
- limiter la communication, entre le système informatique de traitement et le système informatique externe, au port de réseau activé du système informatique de traitement et à un port de réseau du système informatique externe, qui est connu du système informatique de traitement par la connexion établie,
- transmettre les premier et deuxième nombres aléatoires cryptés depuis le système informatique externe directement au système informatique de traitement au moyen de la connexion établie,
- décrypter, dans le système informatique de traitement, les premier et deuxième nombres aléatoires cryptés qui ont été transmis au système informatique de traitement par le système informatique de commutation, et décrypter, dans le système informatique de traitement, les premier et deuxième nombres aléatoires cryptés qui ont été transmis au système informatique de traitement par le système informatique externe ; ainsi que
- vérifier, dans le système informatique de traitement, une concordance respective entre les premier et deuxième nombres aléatoires décryptés qui ont été transmis au système informatique de traitement par le système informatique de commutation et les premier et deuxième nombres aléatoires décryptés qui ont été transmis directement au système informatique de traitement par le système informatique externe.

2. Procédé selon la revendication 1, sachant que le système informatique de traitement maintient fermés, au moins temporairement, des ports de réseau prédéterminés vis-à-vis du système informatique de commutation, de telle sorte qu'un accès au système informatique de traitement par le système informatique de commutation via le réseau au moyen de ces ports de réseau est empêché, le système informatique de traitement pouvant toutefois accéder au systènme informatique de commutation pour récupérer le numéro de port aléatoire et/ou d'autres informations depuis le système informatique de commutation.

3. Procédé selon la revendication 1 ou 2, comprenant les mesures supplémentaires suivantes consistant à :
- limiter la connexion établie par le système informatique externe vers le port de réseau, qui a été sélectivement activé, du système informatique de traitement, à un échange d'informations d'authentification entre le système informatique externe et le système informatique de traitement,
- vérifier des informations d'authentification transmises par le système informatique externe,
- libérer la connexion établie par le système informatique externe vers le port de réseau, qui a été sélectivement activé, du système informatique de traitement, pour un accès étendu au système informatique de traitement ou à d'autres systèmes informatiques de traitement au sein de l'infrastructure de réseau informatique dans le cas où les informations d'authentification ont été vérifiées avec succès.

4. Procédé selon l'une quelconque des revendications 1 à 3, sachant que le premier nombre aléatoire est signé avec une signature du système informatique externe avant la transmission et sachant que le deuxième nombre aléatoire généré dans le système informatique de commutation est signé avec une signature du système informatique de commutation avant la transmission.

5. Procédé selon la revendication 4, sachant que, après la transmission du premier nombre aléatoire signé du système informatique externe au système informatique de commutation, la signature du premier nombre aléatoire est signée avec une autre signature du système informatique de commutation, et
sachant que, après la transmission du deuxième nombre aléatoire signé du système informatique de commutation au système informatique externe, la signature du deuxième nombre aléatoire est signée avec une autre signature du système informatique externe.

6. Procédé selon l'une des revendications 1 à 5, sachant que la connexion entre le système informatique externe et le système informatique de traitement est supprimée par le système informatique de traitement si la vérification de la concordance respective des premier et deuxième nombres aléatoires est négative.

7. Procédé selon l'une quelconque des revendications 2 à 6, sachant que la transmission du numéro de port aléatoire ou d'autres informations depuis le système informatique de commutation vers le système informatique de traitement comprend les étapes suivantes consistant à :
- envoyer une séquence prédéterminée de données du système informatique de commutation ou du système informatique externe au système informatique de traitement, les ports de réseau prédéterminés du système informatique de traitement étant fermés, et la séquence s'adressant dans un ordre prédéterminé à un ou plusieurs ports de réseau du système informatique de traitement,
- vérifier la concordance de la séquence de données transmises avec une séquence prédéfinie dans le système informatique de traitement, ainsi que
- faire en sorte par le système informatique de traitement d'une transmission du numéro de port aléatoire ou d'autres informations au cas où la vérification de la séquence transmise est positive, le système informatique de traitement établissant à son tour une connexion avec le système informatique de commutation et récupérant le numéro de port aléatoire ou d'autres informations depuis le système informatique de commutation.

8. Réseau informatique distribué comprenant
- une infrastructure de réseau informatique, qui comprend au moins un système informatique de commutation et un système informatique de traitement, et
- au moins un système informatique externe qui se trouve en dehors de l'infrastructure de réseau informatique,
sachant que le système informatique externe est configuré pour transmettre un paquet d'instructions au système informatique de commutation afin d'ordonner une communication avec le système informatique de traitement, pour générer et crypter un premier nombre aléatoire de telle sorte que seul le système informatique de traitement puisse décrypter celui-ci et pour transmettre le premier nombre aléatoire crypté au système informatique de commutation,
sachant que le système informatique de commutation est configuré pour générer de manière automatisée un numéro de port aléatoire d'un port de réseau et pour transmettre le numéro de port aléatoire tant au système informatique de traitement qu'au système informatique externe, pour générer et crypter un deuxième nombre aléatoire de telle sorte que seul le système informatique de traitement puisse décrypter celui-ci, et pour transmettre le deuxième nombre aléatoire crypté au système informatique externe, et
sachant que le système informatique de traitement comprend une unité de contrôle d'accès qui est configurée pour maintenir fermés au moins temporairement des ports de réseau prédéterminés de telle sorte qu'un accès au système informatique de traitement par le système informatique externe via un réseau au moyen de ces ports de réseau est empêché, mais un établissement de connexion entre le système informatique de traitement et le système informatique de commutation étant toutefois autorisée pour échanger le numéro de port aléatoire ou d'autres informations,
sachant que l'unité de contrôle d'accès est en outre configurée pour activer un port de réseau correspondant au numéro de port aléatoire pour activer une communication avec le système informatique externe et, après avoir établi une connexion avec le port de réseau sélectivement activé du système informatique de traitement, pour limiter la communication entre le système informatique de traitement et le système informatique externe au port de réseau activé du système informatique de traitement et à un port de réseau du système informatique externe qui est connu du système informatique de traitement par la connexion établie,
sachant que le système informatique de commutation est en outre configuré pour transmettre les premier et deuxième nombres aléatoires cryptés au système informatique de traitement,
sachant que le système informatique externe est en outre configuré pour transmettre directement via la connexion établie les premier et deuxième nombres aléatoires cryptés au système informatique de traitement, et
sachant que le système informatique de traitement est en outre configuré pour décrypter les premier et deuxième nombres aléatoires cryptés transmis par le système informatique de commutation et par le système informatique externe, respectivement, et pour vérifier une concordance respective des premier et deuxième nombres aléatoires décryptés qui ont été transmis par le système informatique de commutation au système informatique de traitement avec les premier et deuxième nombres aléatoires décryptés qui ont été transmis par le système informatique externe directement au système informatique de traitement.

9. Réseau informatique distribué selon la revendication 8 qui est configuré pour mettre en oeuvre un procédé selon l'une quelconque des revendications 1 à 7.

10. Produit de programme informatique qui est configuré pour être exécuté sur un ou plusieurs systèmes informatiques et qui, lorsqu'il est exécuté, met en oeuvre un procédé selon l'une des revendications 1 à 7.
